(19) **Europäisches Patentamt / European Patent Office / Office européen des brevets**

(11) **EP 4 580 276 A1**

(12) **EUROPEAN PATENT APPLICATION**
published in accordance with Art. 153(4) EPC

(43) Date of publication:
**02.07.2025 Bulletin 2025/27**

(21) Application number: **23887856.5**

(22) Date of filing: **31.10.2023**

(51) International Patent Classification (IPC):
**H04W 72/02** (2009.01)    **H04W 72/04** (2023.01)

(52) Cooperative Patent Classification (CPC):
**H04L 1/1607; H04L 1/1812; H04L 5/00;
H04W 72/02; H04W 72/04; H04W 72/0446;
H04W 72/0453; H04W 72/20; H04W 72/25;
H04W 72/40**

(86) International application number:
**PCT/CN2023/128208**

(87) International publication number:
**WO 2024/099166 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.11.2022   CN 202211403174
27.12.2022   CN 202211685760**

(71) Applicant: **Huawei Technologies Co., Ltd.
Shenzhen, Guangdong 518129 (CN)**

(72) Inventors:
• **WANG, Bichai**
  **Shenzhen, Guangdong 518129 (CN)**
• **HE, Hongli**
  **Shenzhen, Guangdong 518129 (CN)**
• **LI, Xueru**
  **Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **SIDELINK COMMUNICATION METHOD AND APPARATUS**

(57)    Embodiments of this application provide a sidelink communication method and an apparatus. The method includes: A first terminal device determines one or more first resources, where the first resource is used by a plurality of terminal devices to send feedback information, and the feedback information indicates a data receiving status or a data retransmission request. The first terminal device sends first indication information to a second terminal device, where the first indication information indicates time-frequency resource location information of the one or more first resources, and indicates that the first resource is used by the plurality of terminal devices to send the feedback information, and the second terminal device is one of the plurality of terminal devices. According to the method disclosed in this application, the first terminal device determines and configures the first resource used by the plurality of terminal devices to perform HARQ feedback, so that overheads caused by system-level configuration of feedback resources can be reduced, an ultra-low latency service requirement can be met, and system transmission reliability can be improved.

400

First terminal device → Second terminal device

S410: Determine one or more first resources

S420: First indication information

S430: Determine, based on the first indication information, a resource used to send feedback information

FIG. 4

EP 4 580 276 A1

## Description

This application claims priorities to Chinese Patent Application No. 202211403174.3, filed with the China National Intellectual Property Administration on November 9, 2022 and entitled "SIDELINK COMMUNICATION METHOD AND APPARATUS ", and to Chinese Patent Application No. 202211685760.1, filed with the China National Intellectual Property Administration on December 27, 2022 and entitled "SIDELINK COMMUNICATION METHOD AND APPARATUS", both of which are incorporated herein by reference in their entireties.

## TECHNICAL FIELD

This application relates to the communication field, and more specifically, to a sidelink communication method and an apparatus.

## BACKGROUND

In sidelink (sidelink, SL) communication, reliability can be improved by using a hybrid automatic repeat request (hybrid automatic repeat request, HARQ) mechanism. In the HARQ mechanism, after a transmit end sends data to a receive end, the receive end may send a HARQ feedback to the transmit end, to indicate whether the data is correctly received. For example, if the receive end correctly receives the data, the receive end sends an acknowledgment (acknowledgment, ACK) to the transmit end, indicating that the transmit end does not need to perform retransmission. If the receive end does not correctly receive the data, the receive end sends a negative acknowledgment (negative acknowledgment, NACK) to the transmit end, indicating that the transmit end needs to perform retransmission.

The receive end sends the HARQ feedback through a physical sidelink feedback channel (physical sidelink feedback channel, PSFCH). A PSFCH resource is a periodic resource preconfigured in a resource pool. If each slot is configured with a PSFCH resource, system overheads are excessively high. If not all slots are configured with a PSFCH resource, the receive end needs to wait for a slot with a PSFCH resource to perform HARQ feedback, and an ultra-low latency service requirement may not be met.

## SUMMARY

This application provides a sidelink communication method and an apparatus, to reduce system overheads while meeting an ultra-low latency service requirement, and improve system transmission reliability.

According to a first aspect, a sidelink communication method is provided. The method may be performed by a first terminal device (for example, user equipment (user equipment, UE)), or may be performed by a chip or a circuit used in the first terminal device. This is not limited in this application. For ease of description, an example in which the method is performed by the first terminal device is used below for description.

The method includes: The first terminal device determines one or more first resources, where the first resource is used by a plurality of terminal devices to send feedback information, and the feedback information indicates a data receiving status or a data retransmission request. The first terminal device sends first indication information to a second terminal device, where the first indication information indicates location information of the one or more first resources, and indicates that the one or more first resources are used by the plurality of terminal devices to send the feedback information, and the second terminal device is one of the plurality of terminal devices.

According to the solution provided in this application, the first terminal device determines and configures the first resource used for HARQ feedback, so that overheads caused by system-level configuration of PSFCH resources can be reduced, an ultra-low latency service requirement can be met, and system transmission reliability can be improved.

With reference to the first aspect, in some implementations of the first aspect, the first terminal device and the plurality of terminal devices belong to a same group.

Based on this implementation, especially for a star network, a non-system-level HARQ feedback resource is selected in a unit of a group (group), so that overheads caused by system-level configuration of PSFCH resources can be reduced, and excessive overheads caused by system-level configuration of short-period PSFCH resources to meet an ultra-low latency service requirement can be avoided.

With reference to the first aspect, in some implementations of the first aspect, that the first terminal device determines one or more first resources includes: The first terminal device determines a quantity of feedback resource units in the first resource based on feedback capacity requirements of the plurality of terminal devices; and/or the first terminal device determines a period of the first resource based on feedback latency requirements of the plurality of terminal devices.

With reference to the first aspect, in some implementations of the first aspect, the quantity of feedback resource units included in the first resource is greater than or equal to a quantity of the plurality of terminal devices; and/or the period of the first resource is less than or equal to a smallest feedback latency needed by the plurality of terminal devices.

Based on this implementation, the first terminal device can select a non-system-level HARQ feedback resource based on a service feature in a group, for example, the feedback capacity requirements and/or feedback latency requirements of the plurality of terminal devices, to determine the quantity of feedback resource units in the first resource and/or the period of the first resource, thereby reducing overheads caused by system-level configuration of feedback resources.

With reference to the first aspect, in some implementations of the first aspect, the first terminal device sends data to the second terminal device.

With reference to the first aspect, in some implementations of the first aspect, that the first terminal device sends data to the second terminal device includes: The first terminal device sends the data and second indication information to the second terminal device, where the second indication information indicates time-frequency resource location information of the data.

Based on this implementation, the second indication information is sent to reserve a resource used for data transmission, so that the second terminal device can determine a resource for receiving data, and another terminal device can further perform interference avoidance when selecting a resource, thereby reducing interference between devices.

With reference to the first aspect, in some implementations of the first aspect, data is sent in a unicast or multicast manner.

With reference to the first aspect, in some implementations of the first aspect, the first indication information includes one or more of the following: a time offset between a time domain unit in which the first terminal device sends the first indication information and a time domain unit in which a second resource is located, frequency domain resource location information of the first resource or the second resource, and a period of the first resource or the second resource; and the second resource is a $1^{st}$ first resource in the one or more first resources or a first resource that is earliest in time.

Based on this implementation, the second terminal device may determine, based on the time offset that is between the time domain unit in which the first indication information is sent and the time domain unit in which the second resource is located and that is carried in the first indication information, and the period of the first resource, a time domain unit occupied by each of the one or more first resources.

With reference to the first aspect, in some implementations of the first aspect, the first terminal device sends third indication information to the second terminal device, where the third indication information indicates location information of a third resource, and the third resource belongs to the one or more first resources.

Based on this implementation, after receiving the data sent by the first terminal device, the second terminal device may determine, based on the third indication information, the third resource used to send feedback information for the data.

With reference to the first aspect, in some implementations of the first aspect, the first terminal device sends fourth indication information to a third terminal device, where the fourth indication information indicates location information of at least one first resource, and the third terminal device is different from the second terminal device.

Based on this implementation, the fourth indication information is sent, so that another terminal device or a terminal device in another group can perform interference avoidance during subsequent resource selection, thereby reducing interference between devices and improving transmission reliability.

With reference to the first aspect, in some implementations of the first aspect, the first indication information, the third indication information, or the fourth indication information includes one or more of the following: a time resource indicator value (time resource indicator value, TRIV) or time domain unit index information; a frequency resource indicator value (frequency resource indicator value, FRIV) or frequency domain unit index information; or a resource reservation period.

With reference to the first aspect, in some implementations of the first aspect, the first terminal device sends fifth indication information to the second terminal device, where the fifth indication information indicates an index that is of a feedback resource unit and that corresponds to the second terminal device in the first resource.

Based on this implementation, the fifth indication information is sent to indicate the index of the feedback resource unit, so that the second terminal device can perform, in a determined and targeted manner, HARQ feedback on a feedback resource associated with the index of the feedback resource unit, thereby improving transmission performance of the second terminal device.

With reference to the first aspect, in some implementations of the first aspect, the index that is of the feedback resource unit and that corresponds to the second terminal device in the first resource is determined based on one or more of the following:

identification information corresponding to the data sent by the first terminal device to the second terminal device; device identification information of the first terminal device; device identification information of the second terminal device; group header identification information of the first terminal device; or group member identification information of the second terminal device.

Based on this implementation, the second terminal device may further determine the index of the feedback resource unit by using an identifier corresponding to the received data, an identifier corresponding to the first terminal device, an identifier corresponding to the second terminal device, and the like, so that the second terminal device can perform, in a determined and targeted manner, HARQ feedback on a feedback resource associated with the index of the feedback resource unit, thereby improving transmission performance of the second terminal device.

With reference to the first aspect, in some implementations of the first aspect, the index m that is of the feedback resource unit and that corresponds to the second terminal device in the first resource satisfies: m = (TID + RID) mod (F), or the index m that is of the feedback resource unit and that corresponds to the second terminal device in the first resource satisfies: m = RID mod (F).

TID represents a layer 1 source identifier or a layer 2 source identifier corresponding to the data sent by the first terminal device to the second terminal device, a device identifier of the first terminal device, or a group header identifier of the first terminal device, RID represents a layer 1 destination identifier or a layer 2 destination identifier corresponding to the data sent by the first terminal device to the second terminal device, a device identifier of the second terminal device, or a group member identifier of the second terminal device, and F is a total quantity of indexes of feedback resource units included in the first resource.

Alternatively, TID represents a source identifier corresponding to the data sent by the first terminal device to the second terminal device, and RID represents a destination identifier corresponding to the data sent by the first terminal device to the second terminal device. This is not specifically limited in this application.

Based on this implementation, two implementations are provided to determine the index of the feedback resource unit of the second terminal device, so that the second terminal device can perform HARQ feedback on a resource associated with the index of the feedback resource unit.

With reference to the first aspect, in some implementations of the first aspect, an index of a feedback resource unit is associated with one or more of the following: a frequency domain subunit, a time domain subunit, a ZC sequence cyclic shift pair, and an orthogonal cover code (orthogonal cover code, OCC), where the ZC sequence cyclic shift pair includes a first ZC sequence cyclic shift and a second ZC sequence cyclic shift, the first ZC sequence cyclic shift indicates an ACK, and the second ZC sequence cyclic shift indicates a NACK.

Based on this implementation, a definition of the index of the feedback resource unit is provided, so that the plurality of terminal devices can implement orthogonal transmission on a same time-frequency resource through code division multiplexing, thereby improving resource utilization and ensuring system transmission performance.

With reference to the first aspect, in some implementations of the first aspect, all resources included in the first resource are used by the plurality of terminal devices to send the feedback information; or some time domain subunits and/or frequency domain subunits included in the first resource are used by the plurality of terminal devices to send side control information, and the other time domain subunits and/or frequency domain subunits included in the first resource are used by the plurality of terminal devices to send the feedback information.

Based on this implementation, the second terminal device may send the feedback information, or the feedback information and the side control information on the first resource, depending on whether the second terminal device needs to send a PSCCH on the first resource.

With reference to the first aspect, in some implementations of the first aspect, the plurality of terminal devices further include a fourth terminal device, and when the second terminal device and the fourth terminal device send the feedback information on a first sub-time-frequency domain resource included in the one or more first resources, the second terminal device and the fourth terminal device use different OCCs, and the first sub-time-frequency domain resource includes at least two time domain subunits.

Based on this implementation, the plurality of terminal devices can implement orthogonal transmission on a same time-frequency resource through code division multiplexing, thereby improving resource utilization and ensuring system transmission performance.

According to a second aspect, a sidelink communication method is provided. The method may be performed by a second terminal device (for example, UE 2), or may be performed by a chip or a circuit used in the second terminal device. This is not limited in this application. For ease of description, an example in which the method is performed by the second terminal device is used below for description.

The method includes: The second terminal device receives first indication information from a first terminal device, where the second terminal device is one of a plurality of terminal devices, the first indication information indicates location information of one or more first resources, and indicates that the one or more first resources are used by the plurality of terminal devices to send feedback information, the one or more first resources are determined by the first terminal device, the first resource is used by the plurality of terminal devices to send the feedback information, and the feedback information indicates a data receiving status or a data retransmission request. The second terminal device determines, based on the first indication information, a resource used to send the feedback information.

According to the solution provided in this application, the first terminal device determines and configures the first resource used for HARQ feedback, so that overheads caused by system-level configuration of PSFCH resources can be reduced, an ultra-low latency service requirement can be met, and system transmission reliability can be improved.

With reference to the second aspect, in some implementations of the second aspect, the first terminal device and the plurality of terminal devices belong to a same group.

Based on this implementation, especially for a star network, a non-system-level HARQ feedback resource is selected in a unit of a group, so that overheads caused by system-level configuration of PSFCH resources can be reduced, and excessive overheads caused by system-level configuration of short-period PSFCH resources to meet an ultra-low latency service requirement can be avoided.

With reference to the second aspect, in some implementations of the second aspect, the second terminal device receives data from the first terminal device. That the second terminal device receives data from the first terminal device includes: The second terminal device receives the data and second indication information from the first terminal device, where the second indication information indicates time-frequency resource location information of the data.

Based on this implementation, the second indication information is sent to reserve a resource used for data transmission, so that the second terminal device can determine a resource for receiving data, and another terminal device can further perform interference avoidance when selecting a resource, thereby reducing interference between devices.

With reference to the second aspect, in some implementations of the second aspect, the data is sent in a unicast or multicast manner.

With reference to the second aspect, in some implementations of the second aspect, the first indication information includes one or more of the following: a time offset between a time domain unit in which the first terminal device sends the first indication information and a time domain unit in which a second resource is located, frequency domain resource location information of the first resource or the second resource, and a period of the first resource or the second resource; and the second resource is a $1^{st}$ first resource in the one or more first resources or a first resource that is earliest in time.

With reference to the second aspect, in some implementations of the second aspect, the second terminal device receives third indication information from the first terminal device, where the third indication information indicates location information of a third resource, and the third resource belongs to the one or more first resources; or the second terminal device determines location information of a third resource based on sixth indication information, where the sixth indication information indicates information about a minimum time gap between a time domain unit in which the second terminal device receives data and a time domain unit in which the second terminal device sends the feedback information for the data, and the third resource belongs to the one or more first resources; and the sixth indication information is information sent by the first terminal device to the second terminal device, the sixth indication information is preconfigured information, or the sixth indication information is information configured by a network device.

With reference to the second aspect, in some implementations of the second aspect, the second terminal device sends fourth indication information to a third terminal device, where the fourth indication information indicates location information of at least one first resource, and the third terminal device is different from the first terminal device.

Optionally, in this implementation, the first resource may be considered as a HARQ feedback resource, for example, a resource used to send feedback information in a mini-slot 1.

Based on this implementation, the third indication information is sent, so that another terminal device or a terminal device in another group can perform interference avoidance during subsequent resource selection, thereby reducing interference between devices and improving transmission reliability.

With reference to the second aspect, in some implementations of the second aspect, the first indication information, the third indication information, or the fourth indication information includes one or more of the following: a time resource indicator value TRIV or time domain unit index information; a frequency resource indicator value FRIV or frequency domain unit index information; or a resource reservation period.

With reference to the second aspect, in some implementations of the second aspect, the second terminal device receives fifth indication information from the first terminal device, where the fifth indication information indicates an index that is of a feedback resource unit and that corresponds to the second terminal device in the first resource.

Based on this implementation, the fifth indication information is sent to indicate the index of the feedback resource unit, so that the second terminal device can perform, in a determined and targeted manner, HARQ feedback on a feedback resource associated with the index of the feedback resource unit, thereby improving transmission performance of the second terminal device.

With reference to the second aspect, in some implementations of the second aspect, the index that is of the feedback resource unit and that corresponds to the second terminal device in the first resource is determined based on one or more of the following: identification information corresponding to the data sent by the first terminal device to the second terminal device; device identification information of the first terminal device; device identification information of the second terminal device; group header identification information of the first terminal device; or group member identification information of the second terminal device.

Based on this implementation, the second terminal device may further determine the index of the feedback resource unit by using an identifier corresponding to the received data, an identifier corresponding to the first terminal device, an identifier corresponding to the second terminal device, and the like, so that the second terminal device can perform, in a determined and targeted manner, HARQ feedback on a feedback resource associated with the index of the feedback resource unit, thereby improving transmission performance of the second terminal device.

With reference to the second aspect, in some implementations of the second aspect, the index m that is of the feedback resource unit and that corresponds to the second terminal device in the first resource satisfies: m = (TID + RID) mod (F), or the index m that is of the feedback resource unit and that corresponds to the second terminal device in the first resource satisfies: m = RID mod (F).

TID represents a layer 1 source identifier or a layer 2 source identifier corresponding to the data sent by the first terminal device to the second terminal device, a device identifier of the first terminal device, or a group header identifier of the first terminal device, RID represents a layer 1 destination identifier or a layer 2 destination identifier corresponding to the data sent by the first terminal device to the second terminal device, an identifier of the second terminal device, or a group member identifier of the second terminal device, and F is a total quantity of indexes of feedback resource units included in the first resource.

Based on this implementation, two implementations are provided to determine the index of the feedback resource unit of the second terminal device, so that the second terminal device can perform HARQ feedback on a resource associated with the index of the feedback resource unit.

With reference to the second aspect, in some implementations of the second aspect, an index of a feedback resource unit is associated with one or more of the following: a frequency domain subunit, a time domain subunit, a ZC sequence cyclic shift pair, and an OCC, where the ZC sequence cyclic shift pair includes a first ZC sequence cyclic shift and a second ZC sequence cyclic shift, the first ZC sequence cyclic shift indicates an ACK, and the second ZC sequence cyclic shift indicates a NACK.

Based on this implementation, a definition of the index of the feedback resource unit is provided, so that the plurality of terminal devices can implement orthogonal transmission on a same time-frequency resource through code division multiplexing, thereby improving resource utilization and ensuring system transmission performance.

With reference to the second aspect, in some implementations of the second aspect, the second terminal device sends the feedback information to the first terminal device based on the corresponding index of the feedback resource unit in the first resource.

With reference to the second aspect, in some implementations of the second aspect, the second terminal device sends the fourth indication information to the third terminal device through a physical sidelink control channel (physical sidelink control channel, PSCCH), where the fourth indication information indicates the location information of the at least one first resource, and a time-frequency resource occupied by the PSCCH and a time-frequency resource occupied by the feedback information sent by the second terminal device to the first terminal device belong to a same first resource. The third terminal device, the first device, and the plurality of devices may belong to a same group or different groups. This is not specifically limited in this application.

Based on this implementation, after determining a resource associated with the index of the feedback resource unit, the second terminal device may determine, based on whether the PSCCH needs to be sent, whether to send the feedback information on the first resource or send the feedback information and side control information on the first resource. This also indicates that a HARQ feedback resource determined by the first terminal device has better adaptability.

With reference to the second aspect, in some implementations of the second aspect, the plurality of terminal devices further include a fourth terminal device, and when the second terminal device and the fourth terminal device send the feedback information on a first sub-time-frequency domain resource included in the one or more first resources, the second terminal device and the fourth terminal device use different OCCs, and the first sub-time-frequency domain resource includes at least two time domain subunits.

Based on this implementation, the plurality of terminal devices can implement orthogonal transmission on a same time-frequency resource through code division multiplexing, thereby improving resource utilization and ensuring system transmission performance.

According to a third aspect, a communication apparatus is provided, and includes: a processing unit, configured to determine one or more first resources, where the first resource is used by a plurality of terminal devices to send feedback information, and the feedback information indicates a data receiving status or a data retransmission request; and a transceiver unit, configured to send first indication information to a second terminal device, where the first indication information indicates location information of the one or more first resources, and indicates that the first resource is used by the plurality of terminal devices to send feedback information, and the second terminal device is one of the plurality of terminal devices.

The transceiver unit may perform receiving and sending in the first aspect, and the processing unit may perform processing other than receiving and sending in the first aspect.

According to a fourth aspect, a communication apparatus is provided, and includes: a transceiver unit, configured to receive first indication information from a first terminal device, where the second terminal device is one of a plurality of terminal devices, the first indication information indicates location information of one or more first resources, and indicates that the first resource is used by the plurality of terminal devices to send feedback information, the one or more first resources are determined by the first terminal device, the first resource is used by the plurality of terminal devices to send the feedback information, and the feedback information indicates a data receiving status or a data retransmission request; and a processing unit, configured to determine, by the second terminal device based on the first indication information, a resource used to send feedback information.

The transceiver unit may perform receiving and sending in the second aspect, and the processing unit may perform processing other than receiving and sending in the second aspect.

According to a fifth aspect, a communication apparatus is provided, and includes a transceiver, a processor, and a memory. The processor is configured to control the transceiver to receive and send a signal. The memory is configured to store a computer program. The processor is configured to: invoke the computer program from the memory and run the computer program, so that the communication apparatus performs the method according to any one of the first aspect and the second aspect or the possible implementations of the first aspect and the second aspect.

Optionally, there are one or more processors, and there are one or more memories.

Optionally, the memory and the processor may be integrated together, or the memory and the processor may be disposed separately.

Optionally, the communication apparatus further includes a transmitter (transmitter device) and a receiver (receiver device).

According to a sixth aspect, a communication system is provided, and includes a first terminal device and a second terminal device.

According to a seventh aspect, a computer-readable storage medium is provided. The computer-readable storage medium stores a computer program or code. When the computer program or code is run on a computer, the computer is enabled to perform the method according to any one of the first aspect and the second aspect or the possible implementations of the first aspect and the second aspect.

According to an eighth aspect, a chip is provided, and includes at least one processor. The at least one processor is coupled to a memory. The memory is configured to store a computer program. The processor is configured to: invoke the computer program from the memory and run the computer program, so that an apparatus on which a chip system is installed performs the method according to any one of the first aspect and the second aspect or the possible implementations of the first aspect and the second aspect.

The chip may include an input circuit or interface for sending information or data and an output circuit or interface for receiving information or data.

According to a ninth aspect, a computer program product is provided. The computer program product includes computer program code. When the computer program code is run on an apparatus, the apparatus is enabled to perform the method according to any one of the first aspect and the second aspect or the possible implementations of the first aspect and the second aspect.

## BRIEF DESCRIPTION OF DRAWINGS

FIG. 1 is a diagram of a wireless communication system applicable to an embodiment of this application;

FIG. 2 is a diagram of an SL slot structure and PSFCH resource configuration;

FIG. 3 is a diagram of a structure of a star network according to an embodiment of this application;

FIG. 4 is a schematic flowchart of a sidelink communication method 500 according to an embodiment of this application;

FIG. 5 is a diagram of a HARQ feedback resource according to an embodiment of this application;

FIG. 6 is a diagram of a structure of a communication apparatus 1000 according to an embodiment of this application;

FIG. 7 is a diagram of a structure of a communication apparatus 2000 according to an embodiment of this application; and

FIG. 8 is a diagram of a structure of a chip system 3000 according to an embodiment of this application.

## DESCRIPTION OF EMBODIMENTS

The following describes technical solutions in embodiments of this application with reference to accompanying drawings.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

For example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. V2V refers to communication between vehicles. V2P refers to communication between a vehicle and a person (including a pedestrian, a bicycle rider, a driver, or a passenger). V2I refers to communication between a vehicle and an infrastructure. The infrastructure is, for example, a road side unit (road side unit, RSU) or a network device. There are two types of RSUs: a terminal-type RSU and a base station-type RSU. Because the terminal-type RSU is deployed on a road side, the terminal-type RSU is in a non-mobile state, and mobility does not need to be considered. The base station-type RSU can provide timing synchronization and resource scheduling for a vehicle that communicates with the base station-type RSU. V2N refers to communication between a vehicle and a network device. It may be understood that the foregoing descriptions are examples, and are not limited in embodiments of this application. For example, V2X may further include NR system-based V2X communication in current 3GPP Rel-16 and later releases.

The terminal device in embodiments of this application may also be referred to as user equipment UE, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of the terminal are a mobile phone (mobile phone), customer-premises equipment (customer-premises equipment, CPE), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a wearable device, a terminal device in a 5G network, or a terminal device in a future evolved public land mobile network (public land mobile network, PLMN). This is not limited in embodiments of this application.

By way of example, and not limitation, in embodiments of this application, the terminal device may alternatively be a wearable device. The wearable device may also be referred to as a wearable intelligent device, and is a general term of wearable devices developed by intelligently designing daily wear by using a wearable technology, such as glasses, gloves, a watch, clothing, and shoes. The wearable device is a portable device that is directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In embodiments of this application, an apparatus, namely, a terminal device, for implementing a function of a terminal device may be a terminal device, or may be an apparatus, for example, a chip system or a chip, that can support a terminal device in implementing the function, where the apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or movable. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

In embodiments of this application, an apparatus configured to implement a function of a network device may be a network device, or may be an apparatus that can support the network device in implementing the function, for example, a chip system or a chip. The apparatus may be installed in the network device. In embodiments of this application, the chip system may include a chip, or may include a chip and another discrete component.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application.

It should be noted that the technical solutions of this application are mainly applied to a sidelink transmission scenario, and a used band includes but is not limited to a licensed spectrum and an unlicensed spectrum. The unlicensed spectrum includes a band near 2.4 GHz, a band near 5.8 GHz, and the like.

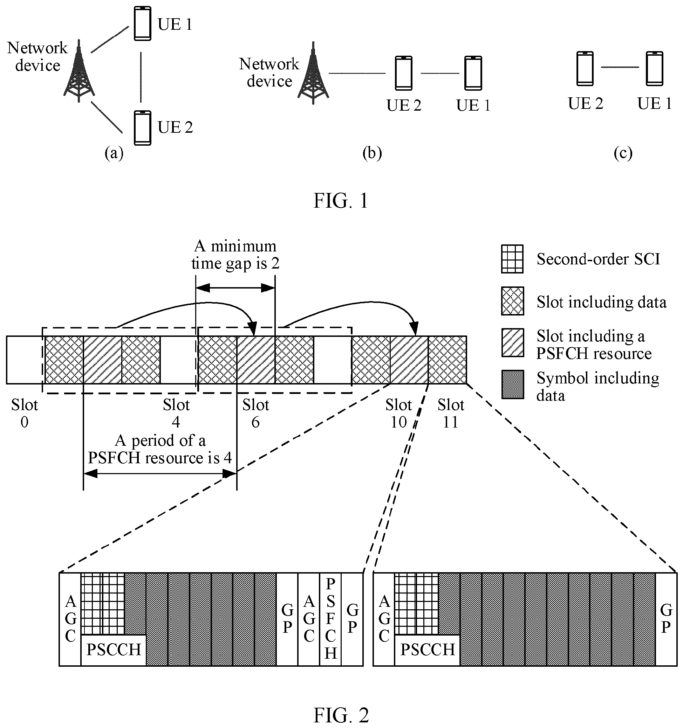

A communication system applicable to embodiments of this application is briefly described below with reference to FIG. 1.

FIG. 1 is a diagram of a wireless communication system applicable to an embodiment of this application. As shown in FIG. 1, the wireless communication system may include at least one terminal device, for example, UE 1 and UE 2 shown in the figure.

Optionally, the wireless communication system may further include at least one network device, for example, a network device shown in the figure. The network device and the terminal device may communicate with each other. For example, the network device and the terminal device may communicate with each other through a Uu interface, and a link for communication between the network device and the terminal device may be denoted as a Uu link. As shown in (a) in FIG. 1, the network device and the UE 1 may directly communicate with each other. As shown in (b) in FIG. 1, the network device and the UE 1 may alternatively communicate with each other through the UE 2. Similarly, the network device and the UE 2 may directly communicate with each other, or the network device and the UE 2 may communicate with each other through the UE 1. It may be understood that, the Uu link represents a connection relationship between the terminal device and the network device, and is a logical concept rather than a physical entity. A main link is merely named for differentiation, and a specific name of the main link does not limit the protection scope of this application.

Optionally, the wireless communication system may not include a network device, that is, only communication between terminal devices is performed. As shown in (c) in FIG. 1, there is no network device in this scenario, and the UE 1 and the UE 2 may directly communicate with each other through a sidelink. Terminal devices may also communicate with each other. For example, the terminal devices may directly communicate with each other. As shown in (a) to (c) in FIG. 1, the UE 1 and the UE 2 may directly communicate with each other. For another example, the terminal devices may communicate with each other through another device. As shown in (a) in FIG. 1, the UE 1 and the UE 2 may communicate with each other through a network device. An interface for communication between terminal devices may be denoted as a proximity-based services communication 5 (proximity-based services communication 5, PC5) interface. A link for communication between terminal devices may be denoted as an SL, and communication between terminal devices may also be denoted as SL communication. The sidelink may also be referred to as a side link, a secondary link, or the like. It may be understood that the sidelink represents a connection relationship between the terminal devices, and is a logical concept rather than a physical entity. The sidelink is merely named for differentiation, and a specific name of the sidelink does not limit the protection scope of this application.

Unicast communication may be performed between devices. For example, unicast communication may be performed between terminal devices. Unicast means that one transmitting terminal and one receiving terminal form a unicast connection pair. For example, unicast communication may be performed between the UE 1 and the UE 2. Multicast communication may be performed between devices. For example, multicast communication may be performed between terminal devices. Multicast means that one transmitting terminal and at least one receiving terminal form a multicast connection pair, or one transmitting terminal communicates with at least one receiving terminal. For example, the UE 1 may perform multicast communication with more UEs.

For example, SL communication between terminal devices may be applied to the internet of vehicles or an intelligent transportation system (intelligent transportation system, ITS), for example, the V2X communication described above, or may be applied to an industrial scenario, for example, a factory and a wharf.

Optionally, SL communication between terminal devices may be performed in network coverage, or may be performed without network coverage. As shown in (a) and (b) in FIG. 1, the UE 1 and other UE may communicate with each other in network coverage. Alternatively, as shown in (c) in FIG. 1, the UE 1 and other UE may communicate with each other outside a network coverage area (out-of-coverage).

Optionally, configuration information used for SL communication between the terminal devices may be configured by the network device, for example, the network device sends configuration information to the terminal device for configuration; or may be preconfigured, for example, related information is pre-recorded in a chip of the terminal device. A time-frequency resource used for SL communication between the terminal devices may be configured or scheduled by the network device, or may be autonomously selected by the terminal device.

It may be understood that FIG. 1 is merely a simplified diagram of an example for ease of understanding. The wireless communication system may further include another network device or may include another terminal device, which is not shown in FIG. 1. Embodiments of this application are applicable to any communication scenario in which a transmit end device communicates with a receive end device.

It should be noted that a specific structure of an entity for performing a method provided in embodiments of this application is not particularly limited in embodiments of this application, provided that the entity can run a program that records code for the method provided in embodiments of this application to perform communication according to the method provided in embodiments of this application. For example, the method provided in embodiments of this application may be performed by a terminal device or a functional module that is in a terminal device and that can invoke the program and execute the program.

For ease of understanding of embodiments of this application, related terms or technologies in sidelink communication in this application are first briefly described.

1. Resource pool

SL communication may be performed based on a resource pool (resource pool). The resource pool is a time-frequency resource dedicated to SL communication. Alternatively, the resource pool may be understood as a set of resources that can be used for SL communication, that is, a set of time domain resources and frequency domain resources used for SL communication.

A resource pool used for SL communication may be briefly referred to as a resource pool, or may be referred to as an SL resource pool. For brevity, the following uses the resource pool for description. The resource pool may also be referred to as a channel (channel), an operating channel (operating channel), a nominal channel (nominal channel bandwidth), or a bandwidth (bandwidth). In other words, the resource pool, the channel, and the bandwidth all represent a set of resources that can be used for SL communication. A name of the resource pool is not limited.

2. Resource

Data or information may be carried on a resource.

In time domain, a resource may include one or more time domain units (or may be referred to as time units). A time domain unit may be a symbol, a mini-slot (mini-slot), a slot (slot), a partial slot (partial slot), a subframe (subframe), a radio frame (frame), or the like. In embodiments of this application, the time domain unit includes one or more time domain subunits, and a time domain subunit may be a slot, a symbol, or the like. For example, when the time domain unit is a slot, the time domain subunit may be a symbol.

In frequency domain, a resource may include one or more frequency domain units. A frequency domain unit may be a resource element (resource element, RE), a resource block (resource block, RB), a subchannel (subchannel), a subband (subband), a resource pool (resource pool), a bandwidth (bandwidth), a bandwidth part (bandwidth part, BWP), a carrier (carrier), a channel (channel), an interlace (interlace) RB, or the like. In embodiments of this application, the frequency domain unit may include one or more frequency domain subunits, and a frequency domain subunit may be a PRB, an RB, an RE, or the like. For example, when the frequency domain unit is a subchannel, the frequency domain subunit may be a PRB.

In an SL, a subchannel is a minimum unit included in a frequency domain resource when a terminal performs data transmission. A higher layer may configure a quantity of frequency domain subunits included in one frequency domain unit in a resource pool, for example, a quantity of physical resource blocks (physical resource block, PRB) included in one subchannel, or a quantity of interlaces.

3. Sidelink information

Transmission of sidelink information means that a terminal device transmits sidelink information on a resource in an SL resource pool. A resource in the resource pool may carry one or more types of sidelink information of a PSCCH, a physical uplink shared channel (physical sidelink shared channel, PSSCH), a PSFCH, a demodulation reference signal (demodulation reference signal, DMRS), a phase tracking reference signal (phase tracking reference signal, PTRS), and a channel state information reference signal (channel state information reference signal, CSI-RS). Sidelink information in LTE does not include the PSFCH.

The PSCCH may be used for transmission of first SCI (which may be briefly referred to as SCI 1). The SCI 1 includes scheduling information of data on the PSSCH associated with the SCI 1. For example, the SCI 1 may carry a time resource assignment (time resource assignment, TRA) indication or a time resource indicator value (time resource indicator value, TRIV), to indicate a time domain resource location of one or two additional reserved resources other than a current slot. The SCI 1 may further carry a frequency resource assignment (frequency resource assignment, FRA) indication or a frequency resource indicator value (frequency resource indicator value, FRIV), to indicate location information of a subchannel occupied by current transmission and a frequency domain resource location of one or two additional reserved resources. The additional reserved resource may be used for retransmission of current transmission. After detecting a reserved retransmission resource indicated by resource reservation indication information in the SCI 1, another device may avoid the resource in advance, to avoid a collision caused by a conflict with the retransmission resource. The SCI 1 may further carry reservation period indication information, to indicate a sending device to periodically reserve a resource occupied by current transmission and/or the additional reserved resource. The SCI 1 may further carry priority indication information, to indicate a priority corresponding to data in the current PSSCH. As described above, the sending device may reserve a resource based on a retransmission requirement of the sending device and a periodic service requirement of the sending device, and the another device determines, by detecting whether reference signal received power (reference signal received power, RSRP) of a DMRS corresponding to the SCI 1 exceeds a threshold, whether the reservation takes effect. Generally, a higher priority indicates a smaller threshold, and resource reservation with a higher priority more easily takes effect, thereby providing better protection for high-priority services.

The PSSCH may be used for transmission of second SCI (which may be briefly referred to as SCI 2) and/or data. For example, a time domain start location of the PSSCH is the same as a time domain start location of a PSCCH, a frequency domain start subchannel is the same as a subchannel of the PSCCH, and partial frequency division multiplexing may be performed with the PSCCH. The PSSCH occupies one or more subchannels in frequency domain.

Alternatively, the PSCCH may be used for SCI transmission, and the PSSCH may be used for data transmission, where indication information included in the SCI is completely or partially the same as indication information included in the first SCI and/or the second SCI.

A PSFCH is used for transmission of HARQ feedback information for data. A resource pool configuration information includes configuration information of the PSFCH, for example, a period in which the PSFCH appears, that is, a slot including a PSFCH resource appears at an interval of a quantity of slots. For example, which PRBs on a symbol can be used for PSFCH transmission. In addition, there is a clear mapping relationship between the PSFCH and the PSSCH, and a receiving device of the PSSCH determines, based on the mapping relationship, one or more PRBs for sending the PSFCH. The mapping relationship is mainly determined based on two parameters: the period in which the PSFCH appears, that is, $N_{PSSCH}^{PSFCH}$, and a minimum slot gap between the PSSCH and the PSFCH to which the PSSCH is mapped.

4. Identifier (identifier, ID) of a terminal device

The identifier of the terminal device may also be referred to as an address of the terminal device, and is an identifier that indicates, identifies, or corresponds to a corresponding terminal device. For example, the terminal device may use an index or a number that uniquely identifies the terminal device. The identifier may be mapped based on a higher layer application, configured by using signaling, preconfigured, or predefined. For example, the terminal device may be mapped to different layer 2 identifiers based on different applications. When performing SL communication, the terminal device may use SCI to carry some or all bits of a layer 2 identifier.

5. Hybrid automatic repeat request HARQ

In a data transmission process, a transmission bit error or a packet loss may occur. Robustness of data transmission can be improved by using a HARQ mechanism.

In the HARQ mechanism, after a transmit end sends data to a receive end, the receive end may send a HARQ feedback to the transmit end, to indicate whether the data is correctly received. For example, if the receive end correctly receives the data, the receive end sends an ACK to the transmit end, and the transmit end considers, based on the ACK, that the data is correctly received, and does not need to be retransmitted. If the receive end does not correctly receive the data, the receive end sends a NACK to the transmit end, and the transmit end considers, based on the NACK, that the data is not correctly received, and needs to be retransmitted.

6. GAP symbol and AGC symbol

A symbol used for receiving/sending or sending/receiving conversion may be referred to as a gap symbol (GAP symbol) or a guard period (guard period, GP) symbol. In a gap symbol, a communication device usually performs neither sending nor receiving. A terminal device may respectively receive and send a PSSCH in two consecutive slots, or the terminal device may respectively receive and send a PSSCH and a PSFCH in a same slot. Therefore, in an SL system, additional GAP symbols need to be added respectively at the end of a slot and between a PSSCH and a PSFCH in a slot, to perform receiving/sending conversion or sending/receiving conversion of the terminal device.

A symbol used for automatic gain control (automatic gain control, AGC) may be referred to as an AGC symbol. The AGC symbol is usually located on a start symbol for transmission, for example, a symbol preceding a start symbol of a PSCCH/PSSCH, or a symbol preceding a PSFCH. A receiving device usually cannot perform AGC adjustment and data receiving and decoding at the same time. Therefore, usually, a sending device copies information on a 1st symbol of the PSCCH/PSSCH to a previous AGC symbol, or copies information on a 1st symbol of the PSFCH to a previous AGC symbol, so that the receiving device can first perform AGC adjustment on the AGC symbol. Because power of all symbols of the sending device in one slot is approximately equal, the receiving device may receive a subsequent PSCCH/PSSCH or PSFCH based on an adjustment result of the AGC symbol.

7. Reserved resource

The reserved resource is a resource reserved for transmitting data or information, and includes a time domain resource and a frequency domain resource. Optionally, reserved resources may be periodically distributed, and a time gap between reserved resources in two adjacent periodicities may be referred to as a reservation period (reservation period), a resource reservation period (resource reservation period), or a resource reservation gap.

The foregoing briefly describes terms used in this application. Details are not described in the following embodiments. In addition, the foregoing descriptions of the terms are merely descriptions for ease of understanding, and do not limit the protection scope of embodiments of this application.

In SL communication, a transmit end sends data through a PSSCH, and sends sidelink control information (sidelink control information, SCI) through a PSCCH associated with the PSSCH, where the SCI carries control information used to decode data in the PSSCH. For ease of description, the SCI includes first-order SCI and/or second-order SCI when no differentiation is made. The first-order SCI is sent through the PSCCH, and the second-order SCI is sent through the PSSCH. A receive end sends a HARQ feedback to the transmit end through a PSFCH, to notify the transmit end of whether the data is correctly received. The receive end sends the HARQ feedback through the PSFCH. Specifically, after receiving the data sent by the transmit end, the receive end sends the HARQ feedback to the transmit end on a PSFCH resource.

The PSFCH resource may be a periodic resource configured in a resource pool. It is assumed that a parameter "periodPSFCHresource" is used to configure a period of the PSFCH resource. In an example, a value of the parameter "periodPSFCHresource" may be 0, 1, 2, or 4. If the value of the parameter "periodPSFCHresource" is 0, it indicates that there is no PSFCH resource in the resource pool, that is, a resource in the resource pool cannot be used to transmit a PSFCH. If the value of the parameter "periodPSFCHresource" is 1, it indicates that there is a PSFCH resource in each slot in the resource pool. If the value of the parameter "periodPSFCHresource" is 2, it indicates that there is a PSFCH resource in one of every two slots in the resource pool. If the value of the parameter "periodPSFCHresource" is 4, it indicates that there is a PSFCH resource in one of every four slots in the resource pool.

In addition, considering data processing time of the receive end, a minimum slot gap between a resource for receiving the data and a resource for sending the HARQ feedback, that is, a minimum slot gap between a PSSCH resource and a PSFCH resource, is (pre)configured for the resource pool. It is assumed that a parameter "MinTimeGapPSFCH" is used to configure the minimum slot gap between the PSSCH resource and the PSFCH resource. In an example, a value of the parameter "MinTimeGapPSFCH" may be 2 or 3. If the value of the parameter "MinTimeGapPSFCH" is 2, it indicates that the minimum slot gap between the PSSCH resource for receiving the data and the PSFCH resource for sending the HARQ feedback for the data is two slots. If the value of the parameter "MinTimeGapPSFCH" is 3, it indicates that the minimum slot gap between the PSSCH resource for receiving the data and the PSFCH resource for sending the HARQ feedback for the data is three slots. In actual communication, an association relationship or a mapping relationship between the PSSCH resource for receiving the data and the PSFCH resource for sending the HARQ feedback for the data may be determined based on the parameter "periodPSFCHresource" and the parameter "MinTimeGapPSFCH".

FIG. 2 is a diagram of an SL slot structure and PSFCH resource configuration. For example, a unit of a time domain resource in a resource pool is a slot, a time domain resource carrying sidelink information is one slot, and one slot includes 14 symbols. As shown in FIG. 2, a value of a parameter "periodPSFCHresource" is 4, that is, there is a PSFCH resource in one of every four slots. For a slot in which there is no PSFCH resource, for example, a slot 11, a 1st symbol is an AGC symbol, and is mainly used by a receive end to adjust an amplification multiple of a received signal; and a last symbol is a guard period (guard period, GP) symbol, and is mainly used for receiving/sending conversion or sending/receiving conversion. For a slot in which there is a PSFCH resource, for example, a slot 10, there are resource overheads of three additional symbols, and the three symbols are respectively an AGC symbol, a PSFCH symbol, and a GP symbol. In addition, a value of a parameter "MinTimeGapPSFCH" is 2, that is, a minimum slot gap between a PSSCH resource for receiving data and a PSFCH resource for sending a HARQ feedback for the data is two slots, for example, a slot 4 and a slot 6. Specifically, a PSSCH resource in every four slots is associated with a PSFCH resource in one slot, and each of the four slots is at least separated by two slots from a slot in which the associated PSFCH resource is located.

It can be learned from the foregoing descriptions, if there is a PSFCH resource in each slot in the resource pool, that is, when periodPSFCHresource = 1, total overheads in each slot are 5/14=37%, including two AGC symbols, two GP symbols, and one PSFCH symbol, and system overheads are excessively high. If not all slots are configured with a PSFCH resource, the receive end needs to wait for a slot with a PSFCH resource to perform HARQ feedback, and an ultra-low latency requirement of an ultra-reliable and low latency communication (ultra-reliable and low-latency communication, URLLC) service such as the industrial internet, for example, an end-to-end latency requirement of 1 ms to 4 ms, may not be met. Therefore, to ensure low-latency transmission, a short PSFCH resource period is needed to enable fast HARQ feedback. For example, HARQ feedback in a mini-slot (mini-slot) structure may be considered. However, a shorter PSFCH resource period indicates higher system-level overheads.

In view of this, this application provides a sidelink communication method and apparatus. A more effective HARQ feedback mechanism is designed, so that a first terminal device indicates, to a plurality of terminal devices, location information of a first resource used for HARQ feedback, to reduce overheads caused by system-level configuration of feedback resources, meet an ultra-low latency service requirement, and improve system transmission reliability.

For ease of understanding of embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

Third, in this application, "first", "second", and various numbers (for example, #1 and #2) indicate differentiation for ease of description, but are not intended to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described.

It should be noted that in the following descriptions, names of the information are merely examples for description, are not limited in this application, and should not constitute any limitation on the technical solutions of this application.

Fourth, in this application, the descriptions "when...", "if", and the like all mean that a device performs corresponding processing in an objective case, but are not intended to limit time. The descriptions do not necessarily mean that the device performs a determining action during implementation, and do not mean any other limitation.

Fifth, in this application, the terms "include", "have", and any variants thereof are intended to cover a non-exclusive inclusion. For example, a process, method, system, product, or device that includes a series of steps or units is not necessarily limited to those steps or units that are clearly listed, but may include other steps or units that are not clearly listed or are inherent to the process, method, product, or device.

Sixth, in this application, "indicate" may include a direct indication and an indirect indication. When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication through signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in this application, a "protocol" may be a standard protocol in the communication field, for example, may include a 5G protocol, an NR protocol, and a related protocol used in a future communication system. This is not limited in this application. "Predefined" may include being defined in advance, for example, being defined in a protocol. "Preconfigured" may be implemented by prestoring corresponding code or a corresponding table in a device, or may be implemented in another manner that may indicate related information. A specific implementation thereof is not limited in this application.

Eighth, in this application, "store" may refer to being stored in one or more memories. The one or more memories may be separately disposed, or may be integrated in an encoder, a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Ninth, in this application, "communication" may also be described as "data transmission", "information transmission", "data processing", or the like. "Transmission" includes "sending" and "receiving". "First terminal device" may be described as "UE 1", "second terminal device" may be described as "UE 2", and so on. This is not specially emphasized in this application.

Tenth, in this application, configuration may be signaling configuration, or may be described as configuration signaling. For example, the signaling configuration includes signaling sent by a base station for configuration, where the signaling may be a radio resource control (radio resource control, RRC) message, downlink control information (downlink control information, DCI), or a system information block (system information block, SIB). Optionally, the signaling configuration may alternatively be configured for a terminal device by using preconfigured signaling, or may be configured for a terminal device in a preconfiguration manner. The preconfiguration herein is to define or configure a value of a corresponding parameter in advance in a protocol manner, and store the value in a terminal device during communication with the terminal device. The preconfigured information can be modified or updated when the terminal device is connected to a network. Optionally, in signaling configuration, a value of a related parameter or configuration information may be limited to a resource pool on which the terminal device performs sending or receiving. The resource pool is a set of resources used for transmission on a specific carrier or bandwidth part.

The following describes, in detail with reference to the accompanying drawings, a communication method provided in embodiments of this application. Embodiments provided in this application are applicable to any communication scenario in which a transmit end device communicates with a receive end device, especially an industrial internet service scenario, for example, a URLLC service scenario and an enhanced mobile broadband (enhanced mobile broadband, eMBB) service scenario. A typical topology structure in the industrial internet scenario includes but is not limited to a star structure, a mesh structure, a ring structure, a distributed structure, a tree structure, and a bus structure.

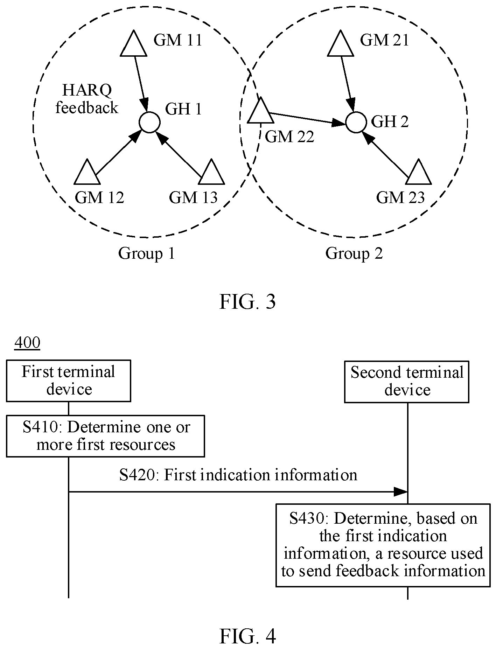

FIG. 3 is a diagram of a structure of a star network according to an embodiment of this application. For example, in a motion control (motion control) scenario, one programmable logic controller (programmable controller, PLC) communicates with a plurality of sensors (sensor) or actuators (actuator). In a star network, terminal devices can be grouped into a plurality of groups. Each group includes a group header (group header, GH) and a plurality of group members (group member, GM). In each group, the GH may send data to the plurality of GMs, and the plurality of GMs may separately send HARQ feedbacks to the GH for the received data. For example, the GH may separately send data to the plurality of GMs in a unicast manner, or may send data to the plurality of GMs in a multicast manner. As shown in FIG. 3, the star network includes two groups: a group 1 and a group 2. In the group 1, a GH 1 may separately send data to a GM 11, a GM 12, and a GM 13, or may simultaneously send data to the GM 11, the GM 12, and the GM 13. Correspondingly, the GM 11, the GM 12, and the GM 13 may separately send HARQ feedback information to the GH 1 after receiving the data. Similarly, in the group 2, a GH 2 may separately send data to a GM 21, a GM 22, and a GM 23, or may simultaneously send data to the GM 21, the GM 22, and the GM 23. Correspondingly, the GM 21, the GM 22, and the GM 23 may separately send HARQ feedback information to the GH 2 after receiving the data.

For example, the GH 1 may select a non-system-level HARQ feedback resource in a unit of a group, and the non-system-level HARQ feedback resource is used by the GM 11, the GM 12, and the GM 13 in the group to perform HARQ feedback. Similarly, the GH 2 may also select a non-system-level HARQ feedback resource in a unit of a group, and the non-system-level HARQ feedback resource is used by the GM 21, the GM 22, and the GM 23 in the group to perform HARQ feedback.

It may be understood that FIG. 3 is merely a simplified diagram of an example for ease of understanding. The star network may further include another group, and a GH and a plurality of GMs in the another group. A quantity of groups, a quantity of GHs, and a quantity of GMs in the star network are not specifically limited in this application.

FIG. 4 is a schematic flowchart of a sidelink communication method 400 according to an embodiment of this application. As shown in FIG. 4, the method includes the following multiple steps.

S410: A first terminal device determines one or more first resources.

The one or more first resources are used by a plurality of terminal devices to send feedback information.

It should be understood that the feedback information may indicate a data receiving status, the feedback information may indicate a data receiving status, the feedback information indicates whether a receive end device successfully receives data, or the feedback information may indicate a data retransmission request, that is, indicate whether a transmit end device needs to retransmit data. For example, if the receive end device successfully receives and decodes the data, the feedback information sent by the receive end device is an ACK. If the receive end device does not receive the data and/or fails to decode the data, the feedback information sent by the receive end device is a NACK. Optionally, the feedback information may also be replaced with a HARQ feedback.

For example, the first terminal device and the plurality of terminal devices belong to a same group. The star network shown in FIG. 3 is used as an example. If the first terminal device and the plurality of terminal devices may belong to the group 1, the first terminal device may be the GH 1, and the plurality of terminal devices may be the GM 11, the GM 12, and the GM 13. In this case, the one or more first resources are used by the GM 11, the GM 12, and the GM 13 to send feedback information. If the first terminal device and the plurality of terminal devices may also belong to the group 2, the first terminal device may be the GH 2, and the plurality of terminal devices may be the GM 21, the GM 22, and the GM 23. In this case, the one or more first resources are used by the GM 21, the GM 22, and the GM 23 to send feedback information.

Optionally, the GH 1 may select different feedback resources for the GMs in the group 1. For example, if the plurality of terminal devices include the GM 11 and the GM 12, the one or more first resources are used by the GM 11 and the GM 12 to send feedback information, and the GM 13 cannot send feedback information on the one or more first resources. For example, the GH 1 may select another feedback resource for the GM 13 to send feedback information. Similarly, the GH 2 may also select different feedback resources for the GMs in the group 2. A specific implementation is similar to the foregoing implementation. Details are not described herein again. That is, the GH may allocate a same feedback resource to all GMs in a same group, or may allocate different feedback resources to different GMs in a same group. For ease of description, in this embodiment of this application, an example in which a GH configures one or more first resources for all GMs in a group is used for specific description.

In a possible implementation, the first terminal device determines, based on feedback capacity requirements of the plurality of terminal devices, a quantity of feedback resource units included in the first resource.

Optionally, the quantity of feedback resource units included in the first resource is greater than or equal to a quantity of the plurality of terminal devices.

The group 1 in the star network shown in FIG. 3 is used as an example. For a URLLC service, if the feedback information of the GM 11, the GM 12, and the GM 13 is all 3 bits, the GH 1 may determine that the quantity of feedback resource units included in the first resource is at least 9 bits. Optionally, if the feedback information of the GM 11, the GM 12, and the GM 13 is all 1 bit, the GH 1 may determine that the quantity of feedback resource units included in the first resource is at least 3 bits. Therefore, the quantity of feedback resource units determined by the GH 1 needs to be at least greater than or equal to a quantity of GMs in the group.

In another possible implementation, the first terminal device determines a period of the first resource based on the feedback latency requirements of the plurality of terminal devices.

Optionally, the period of the first resource is less than or equal to a smallest feedback latency needed by the plurality of terminal devices.

It should be understood that the smallest feedback latency needed by the plurality of terminal devices may be feedback latency requirements of some or all GMs in a same group, or may be a feedback latency requirement of one or more GMs in a group.

The group 1 in the star network shown in FIG. 3 is used as an example. For a URLLC service, if feedback latency requirements of the GM 11, the GM 12, and the GM 13 are respectively 1 ms, 2 ms, and 3 ms, a smallest feedback latency needed in the group is 1 ms, and the GH 1 may determine that the period of the first resource needs to be less than or equal to 1 ms.

Optionally, all resources included in the first resource are used by the plurality of terminal devices to send the feedback information; or some time domain subunits and/or frequency domain subunits included in the first resource are used by the plurality of terminal devices to send side control information (for example, send the side control information through a PSCCH), and the other time domain subunits and/or frequency domain subunits included in the first resource are used by the plurality of terminal devices to send the feedback information.

It should be understood that the foregoing two implementations of determining the first resource may be used independently or in combination. This is not specifically limited in this application. To be specific, the first terminal device may determine, based on a service feature in a group, for example, the feedback capacity requirements and the feedback latency requirements of the plurality of terminal devices, the quantity of feedback resource units included in the first resource and the period of the first resource.

S420: The first terminal device sends first indication information to a second terminal device.

Correspondingly, the second terminal device receives the first indication information from the first terminal device.

The first indication information indicates time-frequency resource location information of the one or more first resources, and indicates that the first resource is used by the plurality of terminal devices to send the feedback information, and the second terminal device is any one of the plurality of terminal devices.

For example, the first terminal device sends the first indication information to the second terminal device by using first SCI and/or second SCI; the first terminal device sends the first indication information to the second terminal device by using media access control control element (media access control control element, MAC CE) signaling; or the first terminal device sends the first indication information to the second terminal device by using RRC signaling. For example, the first terminal device uses the first SCI and/or the second SCI to carry one or more of fields (that is, the first indication information) such as a time resource indicator value TRIV or time domain unit index information, a frequency resource indicator value FRIV or frequency domain unit index information, and a resource reservation period of the one or more first resources, to indicate a time-frequency resource location and/or a period of a HARQ feedback resource (that is, the one or more first resources). Correspondingly, the second terminal device may receive the first indication information by using the first SCI and/or the second SCI, and obtain time-frequency domain location information of the one or more first resources after successful decoding. Alternatively, the first terminal device uses MAC CE or RRC signaling to carry one or more of fields (that is, the first indication information) such as a time resource indicator value TRIV or time domain unit index information, a frequency resource indicator value FRIV or frequency domain unit index information, and a resource reservation period of the one or more first resources, to indicate a time-frequency resource location and/or a period of a HARQ feedback resource (that is, the one or more first resources). Correspondingly, the second terminal device may receive the first indication information by using the MAC CE or RRC signaling, and obtain time-frequency domain location information of the one or more first resources after decoding.

Optionally, the first indication information includes one or more of the following: a time offset between a time domain unit in which the first terminal device sends the first indication information and a time domain unit in which a second resource is located, frequency domain resource location information of the first resource or the second resource, and a period of the first resource or the second resource; and the second resource is a 1st first resource in the one or more first resources or a first resource that is earliest in time. In an example, the first terminal device sends third indication information to the second terminal device, where the third indication information indicates location information of a third resource, and the third resource belongs to the one or more first resources.

The first terminal device may further send data to one or more of the plurality of terminal devices. The one or more of the plurality of terminal devices may send feedback information for the data to the first terminal device on the one or more first resources based on determining and configuring the one or more first resources in steps S410 and S420.

In a possible implementation, the first terminal device sends the first indication information and the data to the second terminal device. Correspondingly, the second terminal device receives the first indication information and the data from the first terminal device.

The second terminal device sends the feedback information for the data to the first terminal device on the one or more first resources indicated by the first indication information. For example, if the second terminal device receives, in a slot 1, the first indication information and the data from the first terminal device, and the first indication information indicates that a first resource is located on a subchannel 1 in a slot 3, the second terminal device sends the feedback information for the data to the first terminal device on the first resource located on the subchannel 1 in the slot 3.

For example, the data may be sent in a unicast or multicast manner. The group 1 in the star network shown in FIG. 3 is used as an example. The second terminal device may be any one of the GM 11, the GM 12, or the GM 13, for example, the GM 11. In this case, the GH 1 sends data to the GM 11 in a unicast manner, or the GH 1 sends data to the GM 11 in a multicast manner.

An occasion for sending the first indication information and the data is not specifically limited in this embodiment of this application. Optionally, the first indication information and the data may be simultaneously sent, for example, sent in a same time domain unit (for example, a slot 1). The first indication information may be indication information in first SCI, and the first SCI may be sent through a PSCCH. For example, the PSCCH occupies some PRBs on a symbol 1 and a symbol 2 in the slot 1. Alternatively, the first indication information may be indication information in second SCI, the second SCI may be sent through a PSSCH, and the data is sent through the PSSCH. For example, the PSSCH occupies the other PRBs on the symbol 1 and the symbol 2 in the slot 1, and all resources on a symbol 3 to a symbol 12 in the slot 1. Optionally, the first indication information may be sent before the data, for example, sent in two consecutive time domain units (for example, a slot 1 and a slot 2), the first indication information is sent in the slot 1, and the data is sent in the slot 2.

In another possible implementation, the first terminal device sends the first indication information, the third indication information, and the data to the second terminal device. Correspondingly, the second terminal device receives the first indication information, the third indication information, and the data from the first terminal device.

The second terminal device determines the time-frequency resource location information of the one or more first resources based on the first indication information. After receiving the data from the first terminal device, the second terminal device sends the feedback information for the data to the first terminal device on the third resource indicated by the third indication information. For example, the first indication information indicates time-frequency resource location information of three first resources, and the three first resources are respectively located on a subchannel 1 in a slot 1, a subchannel 1 in a slot 3, and a subchannel 1 in a slot 5. The second terminal device receives, in a slot 2, the third indication information and the data from the first terminal device, and the third indication information indicates that a time offset between a time domain unit in which the third indication information is located and a time domain unit in which the third resource is located is three time domain units. In this case, the second terminal device may determine, based on the third indication information, that the third resource is located in the slot 5, and the second terminal device sends the feedback information for the data to the first terminal device on the subchannel 1 in the slot 5.

For example, the data may be sent in a unicast or multicast manner. The group 1 in the star network shown in FIG. 3 is used as an example. The second terminal device may be any one of the GM 11, the GM 12, or the GM 13, for example, the GM 11. In this case, the GH 1 sends data to the GM 11 in a unicast manner, or the GH 1 sends data to the GM 11 in a multicast manner.

An occasion for sending the third indication information and the data is not specifically limited in this embodiment of this application. Optionally, the third indication information and the data may be simultaneously sent, for example, sent in a same time domain unit (for example, a slot 1). The third indication information may be indication information in first SCI, and the first SCI may be sent through a PSCCH. Alternatively, the third indication information may be indication information in second SCI, the second SCI may be sent through a PSSCH, and the data is sent through the PSSCH. Optionally, the third indication information may be sent before the data, for example, sent in two consecutive time domain units (for example, a slot 1 and a slot 2), the third indication information is sent in the slot 1, and the data is sent in the slot 2.

Optionally, if the first terminal device needs to reserve a resource used for data transmission, the first terminal device may send second indication information to the second terminal device. Correspondingly, the second terminal device receives the second indication information from the first terminal device. The second indication information indicates information about a time-frequency resource location occupied by the data.

For example, the second indication information may be indication information in the first SCI and/or the second SCI, and the data may be sent through a PSSCH associated with the first SCI and/or the second SCI. For example, fields such as a TRIV, an FRIV, and a resource reservation period carried in the first SCI and/or the second SCI may indicate a reserved resource used for a PSCCH and/or a PSSCH.

An occasion for sending the data and the second indication information is not limited in this embodiment of this application. Optionally, the data and the second indication information may be simultaneously sent, for example, sent in a same time domain unit (for example, a slot 1). The second indication information may be indication information in the first SCI. The first SCI is sent through a PSCCH, where the PSCCH occupies some PRBs on a symbol 1 and a symbol 2 in the slot 1. The data is sent through a PSSCH, where the PSSCH occupies other PRBs on the symbol 1 and the symbol 2 in the slot 1, and all resources on a symbol 3 to a symbol 12 in the slot 1. Alternatively, the second indication information may be indication information in the second SCI, and both the second SCI and the data may be sent through a PSSCH. Optionally, the data may be sent before the second indication information, for example, sent in two consecutive slots (for example, a slot 1 and a slot 2), and the data is sent in the slot 1, and the second indication information is sent in the slot 2. Alternatively, the data may be sent after the second indication information. For example, the second indication information is sent in the slot 1, and the data is sent in the slot 2.

Based on the one or more first resources determined and configured by the first terminal device for the plurality of terminal devices in the group, the first terminal device may further send a resource reservation indication to the third terminal device, to indicate the third terminal device to exclude at least one first resource as much as possible when subsequently selecting a transmission resource, thereby avoiding a resource selection conflict between devices.

In a possible implementation, the first terminal device may send fourth indication information to the third terminal device. For example, the first terminal device sends the fourth indication information in a broadcast manner. Correspondingly, the third terminal device receives the fourth indication information from the first terminal device. The fourth indication information indicates location information of at least one first resource. It should be understood that the third terminal device is different from the second terminal device.

For example, the first terminal device sends the fourth indication information to the third terminal device by using first SCI and/or second SCI; or the first terminal device sends the fourth indication information to the third terminal device by using MAC CE or RRC signaling. Correspondingly, after successfully receiving the first SCI and/or the second SCI, the MAC CE signaling, or the RRC signaling, the third terminal device may determine time-frequency resource location information of the at least one first resource, so that interference can be avoided during resource selection. For example, the first terminal device uses the first SCI and/or the second SCI to carry one or more of fields (that is, the fourth indication information) such as a TRIV or time domain unit index information, an FRIV or frequency domain unit index information, and a resource reservation period of the at least one first resource, to indicate a time-frequency resource location and/or a period of a HARQ feedback resource (that is, the at least one first resource). Correspondingly, the third terminal device may exclude the at least one first resource based on interference strength during resource selection.

The first indication information and the fourth indication information in this embodiment of this application may be same indication information. For example, the first terminal device sends time-frequency resource location indication information of the one or more first resources to both the second terminal device and the third terminal device by using the first SCI and/or the second SCI, the second terminal device determines, based on the time-frequency resource location indication information of the one or more first resources, a resource for sending feedback information, and the third terminal device performs interference avoidance or resource selection based on the time-frequency resource location indication information of the one or the more first resources. Alternatively, the first indication information and the fourth indication information are different indication information. For example, the first terminal device sends the first indication information to the second terminal device by using the MAC CE or RRC signaling, the first terminal device sends the fourth indication information to the third terminal device by using the first SCI and/or the second SCI, the second terminal device determines, based on the first indication information, the one or more first resources for sending feedback information, and the third terminal device performs interference avoidance or resource selection based on the fourth indication information.

Optionally, the third terminal device may belong to a same group as the plurality of terminal devices, or may not belong to a same group as the plurality of terminal devices. This is not specifically limited in this application. If the third terminal device and the plurality of terminal devices belong to a same group, the one or more first resources may not be used by the third terminal device to perform HARQ feedback. Optionally, the first terminal device may allocate another feedback resource to the third terminal device.

Based on the foregoing implementation, reservation indication information of the at least one first resource is sent to the third terminal device, so that the third terminal device can select a transmission resource in a targeted manner, for example, exclude the at least one first resource, to avoid unnecessary transmission interference caused by a resource conflict between devices.

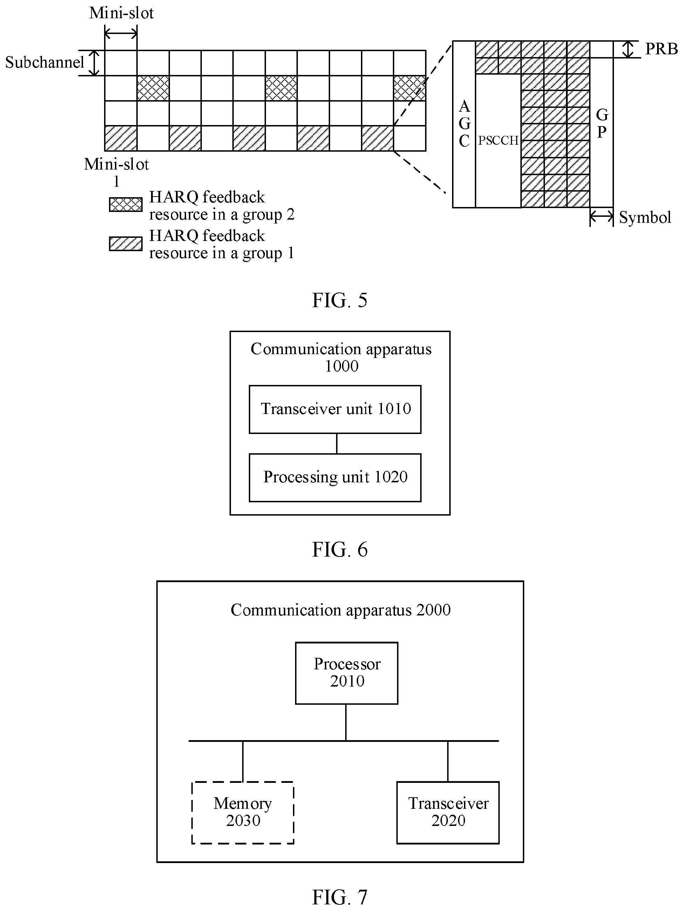

FIG. 5 is a diagram of a HARQ feedback resource according to an embodiment of this application. With reference to the star network shown in FIG. 3, an example in which one HARQ feedback resource includes one mini-slot in time domain and includes one subchannel in frequency domain is used to describe the HARQ feedback resource determined by the first terminal device. As shown in FIG. 5, each subchannel includes 10 PRBs, each mini-slot includes seven symbols, a 1st symbol is an AGC symbol, a 7th symbol is a GP symbol, eight PRBs on each of a 2nd symbol and a 3rd symbol are used to send a PSCCH, and two remaining PRBs on each of the 2nd symbol and the 3rd symbol and all PRBs on a 4th symbol to a 6th symbol are used to send feedback information. Optionally, one HARQ feedback resource determined by a GH may be completely used to send feedback information, but not to send a PSCCH. In other words, all 10 PRBs on the symbol 2 and the symbol 3 may be all used by a GM to perform HARQ feedback.

For example, in the group 1, the first resource determined by the GH 1 based on a HARQ feedback capacity requirement and/or a latency requirement of a service in the group is a HARQ feedback resource in the group 1. The HARQ feedback resource is used by the GM 11, the GM 12, and the GM 13 to send feedback information. Similarly, in the group 2, the first resource determined by the GH 2 based on a HARQ feedback capacity requirement and/or a latency requirement of a service in the group is a HARQ feedback resource in the group 2. It can be learned that the HARQ feedback resource in the group 1 is a periodic resource whose period is two time domain units. In other words, the HARQ feedback resource in the group 1 is included at an interval of a time domain unit. Similarly, the HARQ feedback resource in the group 2 is also a periodic resource whose period is four time domain units. In other words, the HARQ feedback resource in the group 2 is included at an interval of three time domain units. There are HARQ feedback resources with different periodicities in the two groups. Optionally, the HARQ feedback resource in the group 1 and the HARQ feedback resource in the group 2 may also be HARQ feedback resources with a same period. This is not limited in this application. Selecting a HARQ feedback resource by the GH mainly depends on a service feature in the group.

Optionally, in a same time domain unit, frequency division multiplexing (frequency domain multiplexing, FDM) may be performed on a resource used for HARQ feedback and a resource used for sending a PSSCH in another group. For example, in a mini-slot 1 shown in FIG. 5, a HARQ feedback resource in a group 1 occupies one subchannel, and other three subchannels in the mini-slot may be used to send a PSSCH in a group 2 or a group 3.

Optionally, one HARQ feedback resource may be used by one or more GMs to perform HARQ feedback. For example, the GM 11, the GM 12, and the GM 13 may all send feedback information on the one or more HARQ feedback resources in the group 1. For another example, the GM 21, the GM 22, and the GM 23 may sequentially send feedback information to the GH 2 on the one or more HARQ feedback resources in the group 2.

It should be understood that, to enable the GH receiving the HARQ feedback to determine a correct AGC amplification multiple based on an AGC symbol, it needs to be ensured that total receive power of the GH receiving the HARQ feedback on the AGC symbol is the same as or almost the same as total receive power on a symbol for receiving the HARQ feedback information. Therefore, the GM sending the HARQ feedback needs to send a signal on all symbols except a GP symbol, and total transmit power on all symbols is the same.

In the technical solution provided above, the first terminal device may determine, in a targeted manner based on the HARQ feedback capacity requirement and/or the latency requirement of the service in the group, a size and/or the period of the first resource used for HARQ feedback, and feedback resources do not need to be configured at a system level, thereby improving resource utilization and ensuring system transmission performance.

Based on the one or more first resources determined and configured by the first terminal device for the plurality of terminal devices in the group, the first terminal device may further determine and send an index of a HARQ feedback resource unit, so that the plurality of terminal devices determine, based on the index of the HARQ feedback resource unit, a resource location for finally sending the feedback information to the first terminal device on the first resource.

In a possible implementation, the first terminal device sends fifth indication information to the second terminal device. Correspondingly, the second terminal device receives the fifth indication information from the first terminal device. The fifth indication information indicates an index that is of a feedback resource unit and that corresponds to the second terminal device in the first resource.

For example, the fifth indication information may be indication information in the first SCI and/or the second SCI. For example, a new field (that is, the fifth indication information) may be additionally added to the first SCI and/or the second SCI, and the field indicates the index that is of the feedback resource unit and that corresponds to the second terminal device in the first resource. In this case, after receiving the first SCI and/or the second SCI, the second terminal device may obtain the corresponding index of the feedback resource unit after successful decoding, to determine a resource used by the second terminal device to perform HARQ feedback. Alternatively, the fifth indication information may be indication information in the MAC CE or RRC signaling. After receiving the MAC CE or RRC signaling, the second terminal device may obtain the corresponding index of the feedback resource unit after successful decoding, to determine a resource used by the second terminal device to perform HARQ feedback.

An occasion for sending the fifth indication information is not specifically limited in this application.

Optionally, the fifth indication information may be simultaneously sent with any one or more of the foregoing data, the first indication information, the second indication information, the third indication information, and the fourth indication information. For example, the fifth indication information and the first indication information are sent in a same time domain unit (for example, a slot 1). The first indication information may be indication information in the first SCI, and/or the fifth indication information may be indication information in the first SCI. The first SCI may be sent through a PSCCH. For example, the PSCCH occupies some PRBs on a symbol 1 and a symbol 2 in the slot 1. Alternatively, the first indication information may be indication information in the second SCI, and/or the fifth indication information may be indication information in the second SCI. The second SCI may be sent through a PSSCH. For example, the PSSCH occupies the other PRBs on the symbol 1 and the symbol 2 in the slot 1 and all resources on a symbol 3 to a symbol 12 in the slot 1. Alternatively, the fifth indication information, the data, and the second indication information are sent in a same time domain unit (for example, a slot 2). For example, the fifth indication information may be indication information in the first SCI and/or the second SCI, the second indication information may be indication information in the first SCI and/or the second SCI, and the data is carried in a PSSCH associated with the first SCI and/or the second SCI for sending. Optionally, the fifth indication information may be sent before the data, for example, sent in two consecutive time domain units (for example, a slot 1 and a slot 2), the fifth indication information is sent in the slot 1, the data is sent in the slot 2, and the like.

For example, an index of a feedback resource unit is associated with one or more of the following: a frequency domain subunit, a time domain subunit, a ZC sequence cyclic shift pair, and an OCC. The ZC sequence cyclic shift pair includes a first ZC sequence cyclic shift and a second ZC sequence cyclic shift, the first ZC sequence cyclic shift indicates an ACK, and the second ZC sequence cyclic shift indicates a NACK.

A sequence of indexes of feedback resource units in the first resource is not limited in this application. For example, the feedback resource units are sequentially numbered in a sequence of the frequency domain subunit, the ZC sequence cyclic shift pair, and the OCC; the feedback resource units are sequentially numbered in a sequence of the frequency domain subunit, the OCC, and the ZC sequence cyclic shift pair; the feedback resource units are sequentially numbered in a sequence of the OCC, the frequency domain subunit, and the ZC sequence cyclic shift pair; the feedback resource units are sequentially numbered in a sequence of the OCC, the ZC sequence cyclic shift pair, and the frequency domain subunit; the feedback resource units are sequentially numbered in a sequence of the ZC sequence cyclic shift pair, the frequency domain subunit, and the OCC; or the feedback resource units are sequentially numbered in a sequence of the ZC sequence cyclic shift pair, the OCC, and the frequency domain subunit.

Optionally, in a same group, each GM may correspond to indexes of one or more feedback resource units on the first resource. In addition, the indexes of the one or more feedback resource units corresponding to each GM may be completely the same, partially different, or completely different. This is not specifically limited in this application. The group 1 in the star network shown in FIG. 3 is used as an example. The GM 11 may correspond to indexes 1 and 2 of feedback resource units, the GM 12 may correspond to an index 3 of a feedback resource unit, and the GM 13 may correspond to indexes 4 and 5 of feedback resource units. For another example, the GM 11 may correspond to indexes 1 and 2 of feedback resource units, the GM 12 may correspond to indexes 2 and 3 of feedback resource units, and the GM 13 may correspond to indexes 3, 4, and 5 of feedback resource units. The index of the feedback resource unit may be used to determine a time domain subunit and/or a frequency domain subunit in a HARQ feedback resource in the group 1 shown in FIG. 5.

S430: The second terminal device determines, based on the first indication information, a resource used to send the feedback information.

In a possible implementation, the second terminal device may receive the first indication information by using the first SCI and/or the second SCI, the MAC CE signaling, or the RRC signaling, and determine time-frequency resource location information of the one or more first resources. For example, the first terminal device uses the first SCI and/or the second SCI to carry a TRIV or time domain unit index information, an FRIV or frequency domain unit index information, a resource reservation period, and the like of the one or more first resources. Correspondingly, the second terminal device performs decoding after receiving the first SCI and/or the second SCI, to obtain a time-frequency resource location and/or a period of the one or more first resources.

In another possible implementation, the first indication information includes one or more of the following: a time offset between a time domain unit in which the first terminal device sends the first indication information and a time domain unit in which a second resource is located, frequency domain resource location information of the first resource or the second resource, and a period of the first resource or the second resource; and the second resource is a 1st first resource in the one or more first resources or a first resource that is earliest in time. Optionally, the first indication information may be semi-static configuration information configured in advance. Optionally, the first terminal device sends third indication information to the second terminal device, where the third indication information indicates location information of a third resource, and the third resource belongs to the one or more first resources. Correspondingly, the second terminal device may determine, based on the first indication information and the third indication information, the third resource used to send feedback information for the data.

In still another possible implementation, the second terminal device may determine location information of the one or more first resources based on the first indication information sent by the first terminal device, and determine location information of a third resource based on sixth indication information, where the sixth indication information indicates information about a minimum time gap between a time domain unit in which the second terminal device receives data and a time domain unit in which the second terminal device sends feedback information for the data, and the third resource belongs to the one or more first resources; and the sixth indication information is information sent by the first terminal device to the second terminal device, the sixth indication information is preconfigured information, or the sixth indication information is information configured by a network device.

Optionally, a minimum slot gap between a time domain unit in which data is received and a time domain unit in which a HARQ feedback for the data is sent may be determined based on (pre)configuration information, for example, configured by using a parameter "MinTimeGapPSFCH". For example, the configuration information may be configured or preconfigured, for example, (pre) configured for a resource pool; the configuration information is configuration information sent by the first terminal device to the second terminal device, indicating the minimum slot gap; or the configuration information is configured by a base station for the first terminal device and/or the second terminal device. This is not specifically limited in this application. For example, MinTimeGapPSFCH indicates that the minimum slot gap is two slots. If the second terminal device receives data in a slot 1, the second terminal device sends feedback information for the data to the first terminal device on a third resource in a slot 3 or after the slot 3 (which is greater than or equal to two slot gaps). Optionally, the third resource is a HARQ feedback resource (that is, the first resource) that is earliest in time in the slot 3 or after the slot 3.

Optionally, after determining a resource (that is, the one or more first resources or the third resource) used for HARQ feedback, the second terminal device further needs to determine a corresponding index of a feedback resource unit on the one or more first resources or the third resource, and determine one or more of a corresponding symbol, a PRB, a ZC sequence, and an OCC based on the determined index of the feedback resource unit, to finally complete feedback for the data.

In an example, the second terminal device determines, based on the fifth indication information sent by the first terminal device, the index that is of the feedback resource unit and that corresponds to the second terminal device in the first resource.

For example, the fifth indication information may be indication information in the first SCI and/or the second SCI, or the fifth indication information may be indication information in the MAC CE or RRC signaling. For example, a new field (that is, the fifth indication information) may be additionally added to the first SCI and/or the second SCI, and the field indicates the index that is of the feedback resource unit and that corresponds to the second terminal device in the first resource. In this case, after receiving the first SCI and/or the second SCI, the second terminal device may obtain a corresponding index of a feedback resource unit after successful decoding, to determine a resource used for HARQ feedback. For example, as shown in FIG. 5, when the second terminal device determines that a time domain unit of the first resource or the third resource is a mini-slot 1, the second terminal device determines, based on the index of the feedback resource unit that is indicated by the fifth indication information, to send the feedback information for the data on a 5th PRB to an 8th PRB on a symbol 4 in the mini-slot 1.

In another example, the second terminal device determines, based on an identifier of the second terminal device or identification information related to the received data sent by the first terminal device, the index that is of the feedback resource unit and that corresponds to the second terminal device in the first resource.

Optionally, the index m that is of the feedback resource unit and that corresponds to the second terminal device in the first resource satisfies:

$$m = (T_{ID} + R_{ID}) \bmod (F)$$

$T_{ID}$ represents a layer 1 source identifier or a layer 2 source identifier corresponding to the data received by the second terminal device from the first terminal device, a device identifier of the first terminal device, or a group header identifier of the first terminal device, $R_{ID}$ represents a layer 1 destination identifier or a layer 2 destination identifier corresponding to the data received by the second terminal device from the first terminal device, a device identifier of the second terminal device, or a group member identifier of the second terminal device, and F is a total quantity of indexes of feedback resource units included in the first resource.

Optionally, the index m that is of the feedback resource unit and that corresponds to the second terminal device in the first resource satisfies:

$$m = R_{ID} \bmod (F)$$

$R_{ID}$ represents a layer 1 destination identifier or a layer 2 destination identifier corresponding to the data, a device identifier of the second terminal device, or a group member identifier of the second terminal device, and F is a total quantity of indexes of feedback resource units included in the first resource.

Based on the two possible implementations provided above, the second terminal device may determine the index of the feedback resource unit, and finally determine the resource used for HARQ feedback.

In an example, the second terminal device sends the feedback information to the first terminal device based on the corresponding index of the feedback resource unit in the first resource.

In another example, the second terminal device sends the feedback information to the first terminal device based on the corresponding index of the feedback resource unit in the first resource. Further, the second terminal device sends third indication information through a PSCCH, where the third indication information indicates time-frequency resource location information of at least one first resource, and a time-frequency resource occupied by the PSCCH and a time-frequency resource on which the second terminal device sends the feedback information to the first terminal device belong to a same first resource.

Optionally, the plurality of terminal devices may further include a fourth terminal device, and the second terminal device and the fourth terminal device correspond to different indexes of feedback resource units in the first resource. When the second terminal device and the fourth terminal device send the feedback information by using a same ZC sequence cyclic shift on a same sub-time-frequency domain resource (for example, a same PRB on a same symbol, that is, an example of a first sub-time-frequency domain resource) included in the one or more first resources, the second terminal device and the fourth terminal device use different OCCs. Optionally, the first terminal device may also send fifth indication information to the fourth terminal device, so that the fourth terminal device determines an index that is of a feedback resource unit and that corresponds to the fourth terminal device in the first resource, or the fourth terminal device may determine, based on an identifier of the fourth terminal device or identification information related to the received data sent by the first terminal device, an index that is of a feedback resource unit and that corresponds to the fourth terminal device in the first resource.

In a possible implementation, when the second terminal device determines not to send a PSCCH on the first resource, a total quantity N of indexes of feedback resource units included in the first resource satisfies:

$$N = x*y*z$$

x is a quantity of frequency domain subunits included in the first resource, y is a quantity of time domain subunits included in the first resource, and z is a quantity of ZC sequence cyclic shift pairs. In other words, all resources on the first resource in this implementation may be used for HARQ feedback. Optionally, in this embodiment of this application, the first resource may be understood as a resource that does not include an AGC or a GP.

In an example, the first resource includes a first time domain unit and a first frequency domain unit, the first time domain unit includes a plurality of time domain subunits, and the first frequency domain unit includes a plurality of frequency domain subunits. Specifically, first feedback information X1 sent by the second terminal device on the first resource satisfies: $X_1 = [a_1 \cdot s_1, ..., a_n \cdot s_1]$, and second feedback information X2 sent by the fourth terminal device on the first resource satisfies: $X_2 = [b_1 \cdot s_2, ..., b_n \cdot s_2]$.

The second feedback information indicates a receiving status or a retransmission request of data received by the fourth terminal device. An OCC used by the second terminal device is $a = [a_1, ..., a_n]$, and s1 is a ZC sequence sent by the second terminal device on each frequency domain subunit. An OCC used by the fourth terminal device is $b = [b_1, ..., b_n]$, s2 is a ZC sequence sent by the fourth terminal device on each frequency domain subunit, and n is a quantity of time domain subunits included in the first resource. The OCC may use a Walsh (Walsh) code sequence, a discrete Fourier transform (discrete Fourier transform, DFT) sequence, or the like, and different sequences are orthogonal to each other.

Therefore, the second terminal device and the fourth terminal device may determine the index of the feedback resource unit based on the received fifth indication information, or based on identification information related to the received data or device identification information, and then determine, based on the determined index of the feedback resource unit, one or more of a symbol, a PRB, a ZC sequence, and an OCC that correspond to the second terminal device or the fourth terminal device, to send the feedback information to the first terminal device on the first resource.

A HARQ feedback resource in a group 1 shown in FIG. 5 is used as an example. If each UE (for example, the second terminal device and the fourth terminal device) needs to perform 1-bit HARQ feedback, five symbols on a resource 5 may be occupied to send the HARQ feedback, one PRB is occupied on each symbol, and one ZC sequence is sent on each PRB. A different ZC sequence cyclic shift may indicate an ACK or a NACK. For example, if the second terminal device uses an OCC sequence $a = [a_1, a_2, a_3, a_4, a_5]$ whose length is 5, and a ZC sequence sent by the second terminal device on each PRB is s1, for example, s1 is a ZC sequence whose length is 12, the first feedback information sent by the second terminal device on five symbols is $X_1 = [a_1 \cdot s_1, ..., a_5 \cdot s_1]$. Similarly, if the fourth terminal device uses an OCC sequence $b = [b_1, b_2, b_3, b_4, b_5]$ whose length is 5, and a ZC sequence sent by the fourth terminal device on each PRB is s2, for example, s2 is a ZC sequence whose length is 12, the first feedback information sent by the fourth terminal device on five symbols is $X_2 = [b_1 \cdot s_2, ..., b_5 \cdot s_2]$. If the second terminal device and the fourth terminal device occupy a same symbol and PRB in one slot, and the OCC sequences a and b are orthogonal, after receiving the feedback information, the first terminal device may multiply a received signal by the sequence a to eliminate interference of $X_2$, and multiply the received signal by the sequence b to eliminate interference of $X_1$. In other words, the second terminal device and the fourth terminal device may implement orthogonal transmission on a same time-frequency resource through code division multiplexing. It should be understood that, for an OCC sequence whose length is K, there are a maximum of K orthogonal sequences. Therefore, a maximum of K terminal devices (for example, the K terminal devices belong to a same group) may perform orthogonal multiplexing on a same time-frequency resource by using a same ZC sequence cyclic shift pair.

In other words, an index of a feedback resource unit includes a PRB, an OCC, and a ZC sequence cyclic shift pair, and a feedback resource associated with the index of the feedback resource unit may be used to transmit a 1-bit HARQ feedback. For example, a HARQ feedback resource in a group 1 shown in FIG. 5 includes 5 symbols and 10 PRBs. If six different ZC sequence cyclic shift pairs indicate different HARQ feedback information, a quantity of indexes of feedback resource units included in the HARQ feedback resource in the group 1 is 300. If each UE performs 1-bit HARQ feedback, a maximum of 300 UEs can be supported to perform orthogonal multiplexing.

Based on this implementation, a time domain OCC is used to improve a multi-user multiplexing capacity, improve resource utilization, and improve system transmission performance.

In another possible implementation, when the second terminal device determines to send a PSCCH on the first resource, a total quantity N of resource indexes of the first resource satisfies:

$$N = x1 * y1 * z + x2 * y2 * z$$

x1 is a quantity of frequency domain subunits other than a frequency domain subunit occupied by the PSCCH in a first time domain subunit, x2 is a quantity of frequency domain subunits occupied by the PSCCH in the first time domain subunit, y1 is a quantity of time domain subunits included in the first resource, y2 is a quantity of first time domain subunits included in the first resource, z is a quantity of ZC sequence cyclic shift pairs, and the first time domain subunit is a time domain subunit in which the PSCCH is located. In other words, all resources except a PSCCH resource on the first resource in this implementation may be used for HARQ feedback.

In an example, the first resource includes a first time domain unit and a first frequency domain unit, the first time domain unit includes a plurality of time domain subunits, and the first frequency domain unit includes a plurality of frequency domain subunits. Specifically, first feedback information X1 sent by the second terminal device on the first resource satisfies: $X_1 = [\alpha \cdot a_1 \cdot s_1, ...,$

$\alpha \cdot a_i \cdot \mathbf{s}_1, ..., a_n \cdot \mathbf{s}_1]$, and second feedback information X2 sent by the fourth terminal device on the first resource satisfies: $\mathbf{X_2} = [\alpha \cdot b_1 \cdot \mathbf{s}_2, ..., \alpha \cdot b_i \cdot \mathbf{s}_2, ..., b_n \cdot \mathbf{s}_2]$.

The second feedback information indicates a receiving status or a retransmission request of data received by the fourth terminal device. An OCC used by the second terminal device is $\mathbf{a} = [a_1, ..., a_n]$, and s1 is a ZC sequence sent by the second terminal device on each frequency domain subunit. An OCC used by the fourth terminal device is $\mathbf{b} = [b_1, ..., b_n]$, s2 is a ZC sequence sent by the fourth terminal device on each frequency domain subunit, n is a quantity of time domain subunits included in the first resource, i is a quantity of first time domain subunits included in the first resource, the first time domain subunit is a time domain subunit in which the PSCCH is located, and $\alpha$ is a ratio of transmit power of the first feedback information on a first time domain subunit to transmit power of the first feedback information on a second time domain subunit, or $\alpha$ is a ratio of transmit power of the second feedback information on a first time domain subunit to transmit power of the second feedback information on a second time domain subunit, and the second time domain subunit is a time domain subunit other than the first time domain subunit in the first time domain unit.

Optionally, total transmit power of feedback information (for example, the first feedback information or the second feedback information) on the first time domain subunit is less than total transmit power of the feedback information on the second time domain subunit.

Therefore, the second terminal device and the fourth terminal device may determine the index of the feedback resource unit based on the received fifth indication information, or based on identification information related to the received data or device identification information, and then determine, based on the determined index of the feedback resource unit, one or more of a symbol, a PRB, a ZC sequence, and an OCC that correspond to the second terminal device or the fourth terminal device, to send the feedback information to the first terminal device on the first resource.

A HARQ feedback resource in a group 1 shown in FIG. 5 is used as an example. Assuming that a PSCCH occupies two symbols in time domain and occupies eight PRBs in frequency domain, three symbols in a 1st PRB to an 8th PRB may be used for HARQ feedback, and a time domain OCC sequence whose length is 3 may be used; and five symbols in a 9th PRB and a 10th PRB may be used for HARQ feedback, and a time domain OCC sequence whose length is 5 may be used. In this case, a quantity of indexes of feedback resource units included in a HARQ feedback resource in a group 1 is 204. For example, both the second terminal device and the fourth terminal device send a HARQ feedback on the 9th PRB and the 10th PRB by using the OCC sequence whose length is 5. Because both the PSCCH and the HARQ feedback information need to be sent on a 1st symbol and a 2nd symbol, total power for sending the HARQ feedback

information on the 1st symbol and the 2nd symbol needs to be less than total power for sending the HARQ feedback information on a 3rd symbol and a 5th symbol. It is assumed that total transmit power on each symbol is P, and total power for sending the HARQ feedback information on the 1st symbol or the 2nd symbol is $\alpha \cdot P$, where $0 < \alpha < 1$. If the second terminal device uses an OCC sequence $\mathbf{a} = [a_1, a_2, a_3, a_4, a_5]$ whose length is 5, and a ZC sequence sent by the second terminal device on each PRB is s1, for example, s1 is a ZC sequence whose length is 12, the first feedback information sent by the second terminal device on five symbols is $\mathbf{X_1} = [\alpha \cdot a_1 \cdot \mathbf{s}_1, \alpha \cdot a_2 \cdot \mathbf{s}_1, a_3 \cdot \mathbf{s}_1, a_4 \cdot \mathbf{s}_1, a_5 \cdot \mathbf{s}_1]$. Similarly, if the fourth terminal device uses an OCC sequence $\mathbf{b} = [b_1, b_2, b_3, b_4, b_5]$ whose length is 5, and a ZC sequence sent by the fourth terminal device on each PRB is s2, for example, s2 is a ZC sequence whose length is 12, the second feedback information sent by the fourth terminal device on five symbols is $\mathbf{X_2} = [\alpha \cdot b_1 \cdot \mathbf{s}_2, \alpha \cdot b_2 \cdot \mathbf{s_2}, b_3 \cdot \mathbf{s}_2, b_4 \cdot \mathbf{s_2}, b_5 \cdot \mathbf{s_2}]$. If the second terminal device and the fourth terminal device occupy a same symbol and PRB in one slot, and the OCC sequences a and b are orthogonal, after receiving the feedback information, the first terminal device may multiply a received signal by a sequence $\mathbf{a'} = [a_1/\alpha, a_2/\alpha, a_3, a_4, a_5]$ to eliminate interference of $\mathbf{X_2}$, and multiply the received signal by a sequence $\mathbf{b'} = [b_1/\alpha, b_2/\alpha, b_3, b_4, b_5]$ to eliminate interference of $\mathbf{X}_1$. In other words, the second terminal device and the fourth terminal device may implement orthogonal transmission on a same time-frequency resource through code division multiplexing. It should be understood that, for an OCC sequence whose length is K, there are a maximum of K orthogonal sequences. Therefore, a maximum of K terminal devices (where the K terminal devices belong to a same group) may perform orthogonal multiplexing on a same time-frequency resource by using a same ZC sequence cyclic shift pair.

Based on this implementation, a time domain OCC is used to improve a multi-user multiplexing capacity, improve resource utilization, and improve system transmission performance.

Optionally, after determining the one or more first resources finally used to send the feedback information, the second terminal device may send resource reservation indication information to the third terminal device, to indicate, to the third terminal device, that the second terminal device or the plurality of terminal devices perform HARQ feedback on at least one first resource. When subsequently selecting a transmission resource, the third terminal device may exclude the at least one first resource based on interference strength, to avoid interference between devices. In this implementation, a resource conflict may also be avoided when another device selects a resource, to help improve transmission efficiency and system transmission performance.

In a possible implementation, the second terminal device may send fourth indication information to the third terminal device. For example, the second terminal device may send the fourth indication information in a broadcast manner. Correspondingly, the third terminal device receives the fourth indication information from the second terminal device. The fourth indication information indicates time-frequency resource location information of at least one first resource.

For example, the second terminal device sends the fourth indication information to the third terminal device by using first SCI and/or second SCI. For example, the fourth indication information is indication information in the first SCI, the first SCI is sent through a PSCCH, and the PSCCH occupies some time domain sub-resources and/or frequency domain sub-resources in the first resource. Alternatively, the second terminal device sends the fourth indication information to the third terminal device by using MAC CE or RRC signaling. Correspondingly, after successfully receiving the first SCI and/or the second SCI, the MAC CE signaling, or the RRC signaling, the third terminal device may determine time-frequency domain location information of the at least one first resource, so that interference can be avoided during resource selection. For example, when sending the feedback information, the second terminal device sends SCI to the third terminal device, where the SCI carries one or more of fields such as a TRIV or time domain unit index information, an FRIV or frequency domain unit index information, and a resource reservation period of the at least one first resource, to indicate time-frequency domain location information of the at least one first resource. Optionally, the SCI may be carried on a PSCCH. As shown in FIG. 5, a group 1 is used as an example. A GM 11, a GM 12, and a GM 13 may send a same PSCCH on five HARQ feedback resources in the group 1 that are configured by a GH 1, to reserve a resource, so that the third terminal device performs interference avoidance. In this case, the third terminal device may exclude the at least one first resource during resource selection.

Optionally, the plurality of terminal devices may further include a fourth terminal device. In this case, the second terminal device and the fourth terminal device may send a same PSCCH on a HARQ feedback resource (for example, one or more first resources) configured by the first terminal device, to reserve a resource.

According to the technical solution provided in this application, the first terminal device may select a non-system-level HARQ feedback resource based on a service feature in a group, so that a plurality of terminal devices in the group perform HARQ feedback, to reduce overheads caused by system-level configuration of short-period PSFCH resources, improve resource utilization, and ensure system transmission performance.

The foregoing describes in detail embodiments on a communication method side of this application with reference to FIG. 1 to FIG. 5. The following describes in detail embodiments on a communication apparatus side of this application with reference to FIG. 6 and FIG. 7. It should be understood that descriptions of the apparatus embodiments correspond to the descriptions of the method embodiments. Therefore, for a part that is not described in detail, refer to the foregoing method embodiments.

FIG. 6 is a schematic block diagram of a communication apparatus 1000 according to an embodiment of this application. As shown in FIG. 6, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a sending/receiving unit.

In a possible design, the apparatus 1000 may implement corresponding steps or procedures performed by the first terminal device (for example, the UE 1) in the foregoing method embodiments. The processing unit 1020 is configured to perform processing-related operations of the first terminal device in the foregoing method embodiments, and the transceiver unit 1010 is configured to perform sending/receiving-related operations of the first terminal device in the foregoing method embodiments.

In another possible design, the apparatus 1000 may implement corresponding steps or procedures performed by the second terminal device (for example, the UE 2) in the foregoing method embodiments. The transceiver unit 1010 is configured to perform sending/receiving-related operations of the second terminal device in the foregoing method embodiments, and the processing unit 1020 is configured to perform processing-related operations of the second terminal device in the foregoing method embodiments.

It should be understood that the device 1000 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically a transmit end in the foregoing embodiments, and may be configured to perform procedures and/or steps corresponding to the transmit end in the foregoing method embodiments; or the device 1000 may be specifically a receive end in the foregoing embodiments, and may be configured to perform procedures and/or steps corresponding to the receive end in the foregoing method embodiments. To avoid repetition, details are not described herein again.

The device 1000 in the foregoing solutions has a function of implementing corresponding steps performed by the transmit end in the foregoing methods. Alternatively, the device 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, a processing unit, may be replaced by a processor, to separately perform sending/receiving operations and a related processing operation in the method embodiments.

In addition, the transceiver unit may be a transceiver circuit (for example, may include a receiver circuit and a transmitter circuit), and the processing unit may be a processing circuit. In this embodiment of this application, the apparatus in FIG. 6 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 7 is a schematic block diagram of a communication apparatus 2000 according to an embodiment of this application. As shown in FIG. 7, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

In a possible implementation, the apparatus 2000 is configured to implement procedures and steps corresponding to the first terminal device (for example, the UE 1) in the foregoing method embodiments.

In another possible implementation, the apparatus 2000 is configured to implement procedures and steps corresponding to the second terminal device (for example, the UE 2) in the foregoing method embodiments.

It should be understood that the device 2000 may be specifically a transmit end or a receive end in the foregoing embodiments, or may be a chip or a chip system. Correspondingly, the transceiver 2020 may be a transceiver circuit of the chip. This is not limited herein. Specifically, the device 2000 may be configured to perform steps and/or procedures corresponding to the transmit end or the receive end in the foregoing method embodiments.

Optionally, the memory 2030 may include a read-only memory and a random access memory, and provide instructions and data to the processor. A part of the memory may further include a non-volatile random access memory. For example, the memory may further store information about a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

In an implementation process, steps in the foregoing methods can be implemented by using a hardware integrated logical circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by a combination of hardware and a software module in the decoding processor. The software module may be located in a mature storage medium in the art such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and methods described in this specification includes but is not limited to these and any memory of another proper type.

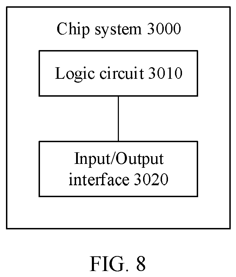

FIG. 8 is a schematic block diagram of a chip system 3000 according to an embodiment of this application. As shown in FIG. 8, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 can implement the methods and the functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by a terminal device in the foregoing method embodiments.

For example, the logic circuit 3010 is configured to implement a processing-related operation performed by the first terminal device in the foregoing method embodiments, for example, a processing-related operation performed by the first terminal device in the embodiment shown in FIG. 4; and the input/output interface 3020 is configured to implement a sending-related operation and/or a receiving-related operation performed by the first terminal device in the foregoing method embodiments, for example, a sending-related operation and/or a receiving-related operation performed by the first terminal device in the embodiment shown in FIG. 4.

For another example, the logic circuit 3010 is configured to implement a processing-related operation performed by the second terminal device in the foregoing method embodiments, for example, a processing-related operation performed by the second terminal device in the embodiment shown in FIG. 4; and the input/output interface 3020 is configured to implement a sending-related operation and/or a receiving-related operation performed by the second terminal device in the foregoing method embodiments, for example, a sending-related operation and/or a receiving-related operation performed by the second terminal device in the embodiment shown in FIG. 4.

An embodiment of this application further provides a computer-readable storage medium. The computer-readable storage medium stores computer instructions used to implement the method performed by the terminal device (for example, the first terminal device or the second terminal device) in the foregoing method embodiments.

An embodiment of this application further provides a computer program product, including instructions. When the instructions are executed by a computer, the method performed by the terminal device (for example, the first terminal device or the second terminal device) in the foregoing method embodiments is implemented.

An embodiment of this application further provides a communication system. The communication system includes the first terminal device and the second terminal device in the foregoing embodiments.

For explanations and beneficial effects of related content of any one of the apparatuses provided above, refer to the corresponding method embodiment provided above. Details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, an apparatus, or the like) to perform all or some of the steps in the methods in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sidelink communication method, comprising:

determining, by a first terminal device, one or more first resources, wherein the first resources are used by a plurality of terminal devices to send feedback information, and the feedback information indicates a data receiving status or a data retransmission request; and
sending, by the first terminal device, first indication information to a second terminal device, wherein the first indication information indicates location information of the one or more first resources, and indicates that the one or more first resources are used by the plurality of terminal devices to send the feedback information, and the second terminal device is one of the plurality of terminal devices.

2. The method according to claim 1, wherein the first terminal device and the plurality of terminal devices belong to a same group.

3. The method according to claim 1 or 2, wherein the determining, by a first terminal device, one or more first resources comprises:

determining, by the first terminal device based on feedback capacity requirements of the plurality of terminal devices, a quantity of feedback resource units comprised in the first resource; and/or
determining, by the first terminal device, a period of the first resource based on feedback latency requirements of the plurality of terminal devices.

4. The method according to any one of claims 1 to 3, wherein

the quantity of feedback resource units comprised in the first resource is greater than or equal to a quantity of the plurality of terminal devices; and/or
the period of the first resource is less than or equal to a smallest feedback latency needed by the plurality of terminal devices.

5. The method according to any one of claims 1 to 4, wherein the method further comprises:
sending, by the first terminal device, data to the second terminal device.

6. The method according to claim 5, wherein the sending, by the first terminal device, data to the second terminal device comprises:
sending, by the first terminal device, the data and second indication information to the second terminal device, wherein the second indication information indicates time-frequency resource location information of the data.

7. The method according to any one of claims 1 to 6, wherein the first indication information comprises one or more of the following: a time offset between a time domain unit in which the first terminal device sends the first indication information and a time domain unit in which a second resource is located, frequency domain resource location information of the first resource or the second resource, and a period of the first resource or the second resource; and

   the second resource is a 1st first resource in the one or more first resources or a first resource that is earliest in time.

8. The method according to claim 7, wherein the method further comprises:
   sending, by the first terminal device, third indication information to the second terminal device, wherein the third indication information indicates location information of a third resource, and the third resource belongs to the one or more first resources.

9. The method according to any one of claims 1 to 8, wherein the method further comprises:
   sending, by the first terminal device, fourth indication information to a third terminal device, wherein the fourth indication information indicates location information of at least one first resource, and the third terminal device is different from the second terminal device.

10. The method according to claim 8 or 9, wherein the first indication information, the third indication information, or the fourth indication information comprises one or more of the following:

    a time resource indicator value TRIV or time domain unit index information;
    a frequency resource indicator value FRIV or frequency domain unit index information; or
    a resource reservation period.

11. The method according to any one of claims 1 to 10, wherein the method further comprises:
    sending, by the first terminal device, fifth indication information to the second terminal device, wherein the fifth indication information indicates an index that is of a feedback resource unit and that corresponds to the second terminal device in the first resource.

12. The method according to any one of claims 1 to 11, wherein the index that is of the feedback resource unit and that corresponds to the second terminal device in the first resource is determined based on one or more of the following:

    identification information corresponding to the data sent by the first terminal device to the second terminal device;
    device identification information of the first terminal device;
    device identification information of the second terminal device;
    group header identification information of the first terminal device; or
    group member identification information of the second terminal device.

13. The method according to claim 11 or 12, wherein

    the index m that is of the feedback resource unit and that corresponds to the second terminal device in the first resource satisfies:

    $$m = (T_{ID} + R_{ID}) \bmod (F);$$

    or
    the index m that is of the feedback resource unit and that corresponds to the second terminal device in the first resource satisfies:

    $$m = R_{ID} \bmod (F),$$

    wherein
    $T_{ID}$ represents a layer 1 source identifier or a layer 2 source identifier corresponding to the data sent by the first terminal device to the second terminal device, a device identifier of the first terminal device, or a group header identifier of the first terminal device, $R_{ID}$ represents a layer 1 destination identifier or a layer 2 destination identifier corresponding to the data sent by the first terminal device to the second terminal device, a device identifier of the second terminal device, or a group member identifier of the second terminal device, and F is a total quantity of indexes of feedback resource units comprised in the first resource.

14. The method according to any one of claims 11 to 13, wherein the index of the feedback resource unit is associated with one or more of the following:

    a frequency domain subunit, a time domain subunit, a ZC sequence cyclic shift pair, and an orthogonal cover code OCC, wherein
    the ZC sequence cyclic shift pair comprises a first ZC sequence cyclic shift and a second ZC sequence cyclic shift, the first ZC sequence cyclic shift indicates an acknowledgment ACK, and the second ZC sequence cyclic shift indicates a negative acknowledgment NACK.

15. The method according to any one of claims 1 to 14, wherein

all resources comprised in the first resource are used by the plurality of terminal devices to send the feedback information; or

some time domain subunits and/or frequency domain subunits comprised in the first resource are used by the plurality of terminal devices to send side control information, and the other time domain subunits and/or frequency domain subunits comprised in the first resource are used by the plurality of terminal devices to send the feedback information.

16. The method according to any one of claims 1 to 15, wherein the plurality of terminal devices further comprise a fourth terminal device, and when the second terminal device and the fourth terminal device send the feedback information on a first sub-time-frequency resource comprised in the one or more first resources, the second terminal device and the fourth terminal device use different orthogonal cover codes OCCs, and the first sub-time-frequency resource comprises at least two time domain subunits.

17. A sidelink communication method, comprising:

receiving, by a second terminal device, first indication information from a first terminal device, wherein the second terminal device is one of a plurality of terminal devices, the first indication information indicates location information of one or more first resources, and indicates that the one or more first resources are used by the plurality of terminal devices to send feedback information, the one or more first resources are determined by the first terminal device, the first resource is used by the plurality of terminal devices to send the feedback information, and the feedback information indicates a data receiving status or a data retransmission request; and

determining, by the second terminal device based on the first indication information, a resource used to send the feedback information.

18. The method according to claim 17, wherein the first terminal device and the plurality of terminal devices belong to a same group.

19. The method according to claim 17 or 18, wherein the method further comprises:
receiving, by the second terminal device, data and second indication information from the first terminal device, wherein the second indication information indicates time-frequency resource location information of the data.

20. The method according to any one of claims 17 to 19, wherein the first indication information comprises one or more of the following: a time offset between a time domain unit in which the first terminal device sends the first indication information and a time domain unit in which a second resource is located, frequency domain resource location information of the first resource or the second resource, and a period of the first resource or the second resource; and

the second resource is a $1^{st}$ first resource in the one or more first resources or a first resource that is earliest in time.

21. The method according to claim 20, wherein the method further comprises:

receiving, by the second terminal device, third indication information from the first terminal device, wherein the third indication information indicates location information of a third resource, and the third resource belongs to the one or more first resources; or

determining, by the second terminal device, location information of a third resource based on sixth indication information, wherein the sixth indication information indicates information about a minimum time gap between a time domain unit in which the second terminal device receives data and a time domain unit in which the second terminal device sends the feedback information for the data, and the third resource belongs to the one or more first resources; and the sixth indication information is information sent by the first terminal device to the second terminal device, the sixth indication information is preconfigured information, or the sixth indication information is information configured by a network device.

22. The method according to any one of claims 17 to 21, wherein the method further comprises:
sending, by the second terminal device, fourth indication information to a third terminal device, wherein the fourth indication information indicates location information of at least one first resource, and the third terminal device is different from the first terminal device.

23. The method according to any one of claims 20 to 22, wherein the first indication information, the third indication information, or the fourth indication information comprises one or more of the following:

a time resource indicator value TRIV or time domain unit index information;
a frequency resource indicator value FRIV or frequency domain unit index information; or
a resource reservation period.

**24.** The method according to any one of claims 17 to 23, wherein the method further comprises:
receiving, by the second terminal device, fifth indication information from the first terminal device, wherein the fifth indication information indicates an index that is of a feedback resource unit and that corresponds to the second terminal device in the first resource.

**25.** The method according to any one of claims 17 to 24, wherein the index that is of the feedback resource unit and that corresponds to the second terminal device in the first resource is determined based on one or more of the following:

identification information corresponding to the data received by the second terminal device from the first terminal device;
device identification information of the first terminal device;
device identification information of the second terminal device;
group header identification information of the first terminal device; or
group member identification information of the second terminal device.

**26.** The method according to claim 24 or 25, wherein

the index m that is of the feedback resource unit and that corresponds to the second terminal device in the first resource satisfies:

$$m = (T_{ID} + R_{ID}) \bmod (F);$$

or
the index m that is of the feedback resource unit and that corresponds to the second terminal device in the first resource satisfies:

$$m = R_{ID} \bmod (F),$$

wherein
$T_{ID}$ represents a layer 1 source identifier or a layer 2 source identifier corresponding to the data received by the second terminal device from the first terminal device, a device identifier of the first terminal device, or a group header identifier of the first terminal device, $R_{ID}$ represents a layer 1 destination identifier or a layer 2 destination identifier corresponding to the data received by the second terminal device from the first terminal device, a device identifier of the second terminal device, or a group member identifier of the second terminal device, and F is a total quantity of indexes of feedback resource units comprised in the first resource.

**27.** The method according to any one of claims 24 to 26, wherein the index of the feedback resource unit is associated with one or more of the following:

a frequency domain subunit, a time domain subunit, a ZC sequence cyclic shift pair, and an orthogonal cover code OCC, wherein
the ZC sequence cyclic shift pair comprises a first ZC sequence cyclic shift and a second ZC sequence cyclic shift, the first ZC sequence cyclic shift indicates an acknowledgment ACK, and the second ZC sequence cyclic shift indicates a negative acknowledgment NACK.

**28.** The method according to any one of claims 24 to 27, wherein the method further comprises:
sending, by the second terminal device, the feedback information to the first terminal device based on the index that is of the feedback resource unit and that corresponds to the second terminal device in the first resource.

**29.** The method according to claim 28, wherein the method further comprises:
sending, by the second terminal device, the fourth indication information to the third terminal device through a physical sidelink control channel PSCCH, wherein the fourth indication information indicates the location information of the at least one first resource, and a time-frequency resource occupied by the PSCCH and a time-frequency resource occupied by the feedback information sent by the second terminal device to the first terminal device belong to a same first resource.

**30.** The method according to any one of claims 16 to 29, wherein the plurality of terminal devices further comprise a fourth terminal device, and when the second terminal device and the fourth terminal device send the feedback information on a first sub-time-frequency domain resource comprised in the one or more first resources, the second terminal device and the fourth terminal device use different orthogonal cover codes OCCs, and the first sub-time-frequency resource comprises at least two time domain subunits.

**31.** A communication apparatus, comprising a module or a unit configured to perform the method according to any one of claims 1 to 16, or a module or a unit configured to perform the method according to any one of claims 17 to 30.

**32.** A communication apparatus, wherein the apparatus comprises a processor, the processor is coupled to a memory, and the memory stores instructions; and when the instructions are run by the processor, the processor is enabled to perform the method according to any one of claims 1 to 30.

33. A communication system, comprising a first terminal device and a second terminal device, wherein the first terminal device is configured to perform the method according to any one of claims 1 to 16, and the second terminal device is configured to perform the method according to any one of claims 17 to 30.

34. A computer-readable storage medium, wherein the computer-readable storage medium is configured to store a computer program, and when the computer program is run on a computer, the computer is enabled to perform the method according to any one of claims 1 to 30.

FIG. 1

FIG. 2

FIG. 3

FIG. 4

Mini-slot

Subchannel

Mini-slot
1

HARQ feedback
resource in a group 2

HARQ feedback
resource in a group 1

PRB

A
G
C

PSCCH

G
P

Symbol

FIG. 5

Communication apparatus
1000

Transceiver unit 1010

Processing unit 1020

FIG. 6

Communication apparatus 2000

Processor
2010

Memory
2030

Transceiver
2020

FIG. 7

Chip system 3000

Logic circuit 3010

Input/Output
interface 3020

FIG. 8

## INTERNATIONAL SEARCH REPORT

| International application No. |
|---|
| **PCT/CN2023/128208** |

### A. CLASSIFICATION OF SUBJECT MATTER

H04W72/02(2009.01)i; H04W72/04(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE, 3GPP: 侧链, 侧行链, 物理侧链路反馈信道, 反馈, 指示, 预留, 干扰规避, PSSCH, PSCCH, SL, sidelink, PSFCH, SCI, HARQ, ACK, NACK, indication, TRIV, FRIV, reserve, interference, avoidance

### C. DOCUMENTS CONSIDERED TO BE RELEVANT

| Category* | Citation of document, with indication, where appropriate, of the relevant passages | Relevant to claim No. |
|---|---|---|
| X | CN 112584549 A (HUAWEI TECHNOLOGIES CO., LTD.) 30 March 2021 (2021-03-30) description, paragraphs [0006] and [100]-[0255] | 1-10, 14-23, 27-34 |
| Y | CN 112584549 A (HUAWEI TECHNOLOGIES CO., LTD.) 30 March 2021 (2021-03-30) description, paragraphs [0006] and [100]-[0255] | 11-13, 24-26 |
| Y | US 2022264536 A1 (GUANGDONG OPPO MOBILE TELECOMMUNICATIONS CORP., LTD.) 18 August 2022 (2022-08-18) claims 1-8 | 11-13, 24-26 |
| A | CN 113348684 A (BEIJING XIAOMI MOBILE SOFTWARE CO., LTD.) 03 September 2021 (2021-09-03) entire document | 1-34 |
| A | CN 113890701 A (VIVO MOBILE COMMUNICATION CO., LTD.) 04 January 2022 (2022-01-04) entire document | 1-34 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 January 2024** | **24 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/128208**

**C.    DOCUMENTS CONSIDERED TO BE RELEVANT**

| Category* | Citation of document, with indication, where appropriate, of the relevant passages | Relevant to claim No. |
|---|---|---|
| A | US 2021288778 A1 (INNOVATIVE TECHNOLOGY LAB CO., LTD.) 16 September 2021 (2021-09-16)<br>     entire document | 1-34 |

Form PCT/ISA/210 (second sheet) (July 2022)

## INTERNATIONAL SEARCH REPORT
### Information on patent family members

International application No.

**PCT/CN2023/128208**

| Patent document cited in search report | | | Publication date (day/month/year) | Patent family member(s) | | | Publication date (day/month/year) |
|---|---|---|---|---|---|---|---|
| CN | 112584549 | A | 30 March 2021 | WO | 2021057502 | A1 | 01 April 2021 |
| | | | | EP | 4025005 | A1 | 06 July 2022 |
| | | | | JP | 2022550127 | A | 30 November 2022 |
| | | | | EP | 4025005 | A4 | 14 December 2022 |
| | | | | US | 2022400467 | A1 | 15 December 2022 |
| | | | | CN | 112584549 | B | 10 March 2023 |
| | | | | CN | 116367359 | A | 30 June 2023 |
| | | | | JP | 7303378 | B2 | 04 July 2023 |
| US | 2022264536 | A1 | 18 August 2022 | WO | 2021098864 | A1 | 27 May 2021 |
| | | | | EP | 4032214 | A1 | 27 July 2022 |
| | | | | EP | 4032214 | A4 | 16 November 2022 |
| CN | 113348684 | A | 03 September 2021 | WO | 2022213333 | A1 | 13 October 2022 |
| | | | | CN | 113348684 | B | 10 January 2023 |
| CN | 113890701 | A | 04 January 2022 | WO | 2022002259 | A1 | 06 January 2022 |
| | | | | US | 2023134982 | A1 | 04 May 2023 |
| | | | | EP | 4178142 | A1 | 10 May 2023 |
| | | | | CN | 113890701 | B | 01 September 2023 |
| US | 2021288778 | A1 | 16 September 2021 | KR | 20200050848 | A | 12 May 2020 |
| | | | | EP | 3876460 | A1 | 08 September 2021 |
| | | | | EP | 3876460 | A4 | 10 August 2022 |

Form PCT/ISA/210 (patent family annex) (July 2022)

**REFERENCES CITED IN THE DESCRIPTION**

**Patent documents cited in the description**

- CN 202211403174
- CN 202211685760